(19) Europäisches Patentamt
European Patent Office
Office européen des brevets

(11) Publication number: 0 483 431 B1

(12) # EUROPEAN PATENT SPECIFICATION

(45) Date of publication of patent specification: 18.10.95

(51) Int. Cl.[6]: C08G 18/54, C08G 18/40

(21) Application number: 90312063.2

(22) Date of filing: 02.11.90

(54) **Polyol and utilization thereof.**

(43) Date of publication of application:
06.05.92 Bulletin 92/19

(45) Publication of the grant of the patent:
18.10.95 Bulletin 95/42

(84) Designated Contracting States:
BE DE ES FR GB IT NL

(56) References cited:
FR-A- 2 223 416
GB-A- 934 629
US-A- 3 499 009

CHEMICAL ABSTRACTS, vol. 101, no. 12, September 1984 Columbus, Ohio, USA"Thermally stable polyurethane resins" page 40; column 2; ref. no. 92044X

CHEMICAL ABSTRACTS, vol. 104, no. 6, February 1986 Columbus, Ohio, USA Asano etal.: "Polyol compositions for rigid polyurethane foams" page 38; column 1; ref.no. 34863O

(73) Proprietor: MITSUI TOATSU CHEMICALS, Inc.
2-5 Kasumigaseki 3-chome
Chiyoda-Ku
Tokyo 100 (JP)

(72) Inventor: Kimura, Masayuki
2882 Iijima-Cho,
Sakae-Ku
Yokohama-Shi,
Kanagawa-Ken 244 (JP)
Inventor: Izukawa, Tsukuru
22-3 Takami,
Ohdaka-Cho
Midori-Ku,
Nagoya-Shi,
Aichi-Ken 459 (JP)
Inventor: Ozaki, Satoshi
Takiharu-Cho 5,
Minami-Ku
Nagoya-Shi,
Aichi-Ken 457 (JP)
Inventor: Kawakami, Haruhiko
4-19 Morigo-Cho,
Atsuta-Ku
Nagoya-Shi,
Aichi-Ken 456 (JP)
Inventor: Masuda, Takayoshi
1-2, Mukaihazama,
Nawa-Machi
Tokai-Shi,
Aichi-Ken 476 (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Kita, Mitsugu**
**36-6 Kamei-Cho,**
**Sakae-Ku**
**Yokohama-Shi,**
**Kanagawa-Ken, 247 (JP)**

(74) Representative: **Rackham, Anthony Charles et al**
**Lloyd Wise, Tregear & Co.**
**Norman House**
**105-109 Strand**
**London WC2R 0AE (GB)**

## Description

The present invention relates to a polyol, polyurethane resin, rigid polyurethane foam, preparation process thereof and a composite of the rigid polyurethane foam.

More particularly, the polyol used in the present invention comprising a phenyl resin base polyol mixed with an aminophenol base polyol or polyphenylpolyxylylenepolyamine base polyol or polymethylenepolyphenylpolyamine base polyol is a raw material for preparing polyurethane resin having resistance to dissolving in hydrochlorofluorocarbons (hereinafter abbreviated as HCFC) and hydrofluorocarbons (hereinafter abbreviated as HFC) which are foaming agents causing very low public hazards. The polyol can provide rigid polyurethane foam and its composite by using the above foaming agents

The rigid polyurethane foam among above products obtained specially has excellent properties equivalent to those of conventional polyurethane foams obtained by the use of chlorofluorocarbons (hereinafter abbreviated as CFC) as foaming agents. Hence, the rigid polyurethane foam of the present invention is extremely useful for the insulating materials or the insulating structural materials of electric refrigerators, freezing ware houses, insulation panels, ships and vehicles.

Rigid polyurethane foam has excellent heat insulation property and low temperarture dimensional stability and thus various composites prepared therefrom are widely used for refrigerators, freezing ware houses, building wall faces, ceilings, heat insulation and structural materials for ships and vehicles, and the heat insulating and protective covers of instruments.

Further, composites containing the rigid polyurethane foam formed on a sheet of face material or in a cavity surrounded by a plurality of face material have already been broadly manufactured by a batch process or a continuous process.

In the present manufacturing process of polyurethane foams, partricularly CFC such as CFC-11 and CFC-12 are generally used as foaming agents. These compounds have recently been recognized as materials causing environmental destruction such as disruption of The ozone layer or enhancement of the green house effect. Accordingly, restriction has recently been imposed upon the manufacture and use of these compounds.

At the same time, HCFC such as 2,2-dichloro-1,1,1-trifluoroethane (HCFC-123), 1,1-dichloro-1-fluoroethane (HCFC-141b) 1-chloro-1,1-difluoroethane (HCFC-142b), 1-chloro-1,1-difluoromethane (HCFC-22) and additionally HFC such as 1,1,1,2-tetrafluoroethane (HFC-134a) and 1,1-difluoroethane (HFC-152a) which cause much less environment destruction have been focused attention as substitutes for CFC-11 and CFC-12. However, it was found that HCFC and HFC have higher dissolving power to polyurethane resin as compared with CFC, and hence have disadvantages of severely deteriorating the properties of resulting polyurethane foams, for example, reduction of closed cell content and foam strength. Particularly it has been found by the present inventors that in the manufacture of rigid polyurethane foams, HCFC and HFC dissolve the cell wall of closed cells in the course of foaming and drastically lower heat insulation effect which is a characteristic property of rigid polyurethane foams.

Consequently, a novel polyurethane resin has been desired strongly to disolve above problems. The conventional polyoxyalkylene polyol used for the raw material of polyurethane resin decreases viscosity according to increase in the amount of alkylene oxide added.

As a result, operations in polyurethane foam production can be conducted with ease. It has been found that excess addition of alkylene oxide leads to dissolution of polyurethane resin into HCFC and HFC, and tends to made application of these foaming agents substantially impossible. On the other hand, when the amount of alkylene oxide added is reduced, it has been certified that a resistance to dissoling in HCFC and HFC is improved slightly, but the polyol becomes solid or extremely viscous and solubility between each raw material decreases and it is very difficult to handle, successively satisfactory product cannot be obtained.

Specially, in the production of rigid polyurethane foam, viscosity of polyol and solubility between polyol, foaming agent and organic polyisocyanate are necessary, and polyol which has a viscosity suitable for foaming operation and is excellent in the mixing and dispersing ability in HCFC and HFC has never been found.

Inventions of Japanese TOKKAI-SHO 57-151613 (1982) and TOKKAI-SHO 57-151614 (1982) disclose a method of blending low molecular weight polyol in order to decrease the viscosity of mixture of amine base polyol and aromatic base polyester polyol (alkylene oxide was not added).

TOKKAI-SHO 51-105394 (1976 disclose mixed polyol having hydroxyl value of 200~500 mgKOH/g comprising novolak base polyol, aromatic amine base polyol and aliphatic polyol. TOKKAI-SHO 63-264616 and TOKKAI-Hei 1-135824 disclose mixed polyol comprising novolak resin base polyol having hydroxyl value of 50~350 mgKOH/g, polyetherpolyol and/or polyesterpolyol. But these inventions have not indicated

the polyols of the present invention and the rigid polyurethane foam produced from their polyol and HCFC or HFC.

According to the invention in one respect there is provided the use of a polyol D, E or G for making a rigid polyurethane foam,

the polyol D consisting of a phenol resin based polyol A and an aminophenol based polyol B in a ratio polyol A/polyol B of from 0.25 to 4.0 by weight and having a hydroxyl value of from 180 to 700 mgKOH/g,

the said polyol A consisting of a polyol a and a polyol b in a polyol a/polyol b ratio of from 0.25 to 4.0 by weight, or a polyol a and a polyol c in a polyol a/polyol c ratio of from 0.1 to 4.0 by weight, the said polyol a having a hydroxyl value of from 140 to 350 mgKOH/g and being prepared by the addition of from 1.0 to 4.5 moles of an alkylene oxide to one equivalent of hydroxyl of a phenol resin or a mixture hereof having a number average molecular weight of from 650 to 1400, an average functionality of from 3 to 8 and the formula:

in which $R_1$ is a hydrogen atom, alkyl having from 1 to 9 carbon atoms, a chlorine, bromine or fluorine atom, or hydroxyl, m is 1, 2 or 3, n is an integer from 1 to 6, and X and Y are same or different divalent groups selected from an alkylene having 1 to 10 carbon atoms, xylene, oxy, thio and sulphonyl or bonded group of the above-mentioned groups,

the said polyol b having a hydroxyl value of 240 to 800 mgKOH/g and being obtained by adding from 0.5 to 3.0 moles of an alkylene oxide to one equivalent of active hydrogen in an alkanolamine series compound or a mixture thereof having the formula :

$NR_2R_2R_3$

in which $R_2$ and $R_3$ are a hydrogen atom, hydroxyethyl or hydroxyisopropyl, $R_2$ and $R_3$ are same or different but excluding the case where both $R_2$ and $R_3$ are hydrogen atoms,

the said polyol c having a hydroxyl value of 130 to 750 mgKOH/g and being obtained by the addition of from 0,8 to 6.5 moles of an alkylene oxide to one equivalent of hydroxyl group of one or more of ethylene glycol, diethylene glycol, propylene glycol, dipropylene glycol, butanediol, neopentyl glycol, cyclohexane dimethanol, cyclohexane tetramethanol, glycerol, trimethylolethane, trimethylolpropane, pentaerythritol, methylglucoside, sorbitol, mannitol, dulcitol and sucrose, and the said aminophenol base polyol B consisting of a polyol d having a hydroxyl value of from 150 to 700 mgKOH/g and the said polyol b in a polyol d/polyol b ratio of from 0.25 to 4.0 by weight or polyol d and polyol c in a polyol d/polyol c ratio of from 0.1 to 4.0 by weight, the said polyol d being obtained by adding from 1.0 to 9.0 moles of an alkylene oxide to one equivalent of active hydrogen in an aminophenol series compound or a mixture thereof having a number average molecular weight of from 100 to 200, average functionality of from 3 to 6, and the formula:

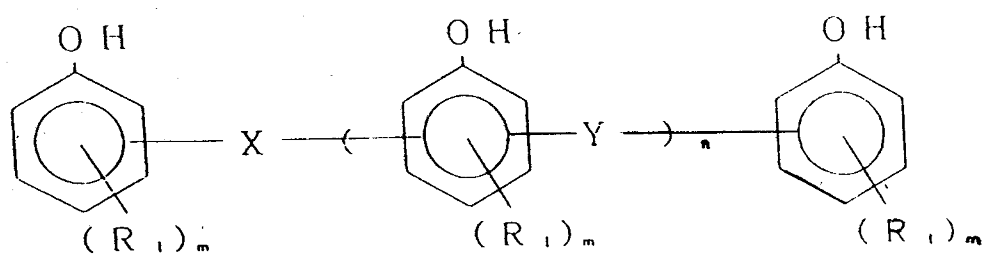

in which $R_o$ is a hydrogen atom, aliphatic hydrocarbon group having from 1 to 10 carbon atoms, or alicyclic hydrocarbon, Z is xylylene and S is O or an integer of from 1 to, 10, and

the said polyol G consisting of the said phenol resin based polyol A and a polyphenylpolyxylylenepolyamine based polyol F in a polyol A/polyol F ration of from 0.25 to 4.0 by weight and having a hydroxyl value of from 180 to 700 mgKOH/g,

the said polyphenylpolyxylylenepolyamine based Polyol F consisting of a polyol f having a hydroxyl value of from 150 to 700 mgKOH/g and the said polyol b in a polyol f/polyol b ration of from 0.25 to 4.0 by weight or the said polyol f and the said polyol c in a polyol f/polyol c ration of from 0.1 to 4.0 by weight, said polyol f being obtained by the addition of from 1.0 to 9.0 moles of an alkylene oxide to one equivalent of active hydrogen in polyphenylpolyxylylenepolyamine.

A rigid polyurethane form can be obtained by the reaction of an organic polyisocyanate with a resin premix consisting a polyol D, E or G as defined above, a foaming agent comprising a single compound or a mixture thereof selected from a hydrochlorofluorocarbon or a hydrofluorocarbon, catalyst, cell regulator,

additives selected from plasticizer, filler, stabilizer, ultraviolet absorber and colorant, and optionally an auxiliary foaming agent.

The invention also extends to a process for the preparation of a rigid polyurethane foam comprising reacting an organic polyisocyanate with a resin premix consisting of the said polyol D, E or G as defined above, a foaming agent comprising a single compound or a mixture thereof selected from a hydrochlorofluorocarbon or a hydrofluorocarbon, catalyst, cell regulator, additives selected from plasticizer, filler, stabilizer, ultraviolet absorber and colorant, and optionally an auxiliary foaming agent, the polyol D, E or G being used in the equivalent ratio of an isocyanate group in the organic polyisocyanate to hydroxyl group in the polyol in the range of from 0.8 to 5.0.

These polyurethane foams and composite made using them have resistance to dissolution in a hydrochlorofluourocarbons and a hydrofluourocarbons which are foaming agents having very low public hazard.

The above-mentioned foams have excellent physical properties equivalent to those of conventional polyurethane foams obtained by using chlorofluorocarbons, and hence are very useful as a thermal insulation material or a thermal insulation structure for refrigerators, freezers, insulation panels, ships or vehicles.

Suitable phenol resins includes, for example, reaction products of phenols such as phenol, cresol, butylphenol, nonylphenol, chlorophenol, resorcinol, hydroquinone, catechol, guaiacol, bisphenol A or bisphenol S with aldehydes such as formaldehyde or acetaldehyde, $\alpha$, $\alpha$' - dimethoxyxylene, $\alpha$, $\alpha$'-dichloroxylene or sulphur. The reaction is carried out by known methods.

A preferred phenol resin is a novolak resin where $R^1$ is a hydrogen atom and both X and Y are methylene, and which has an average number molecules weight (Mn) of 650 to 900, average functionality of 3 to 8, and a softening point of 75 to 120 °C.

The alkylene oxide used for the present invention includes, for example ethylene oxide, propylene oxide and butylene oxide. The alkylene oxide may be used singly or in combination.

It was found that when mole numbers of alkylene oxide addition are increased, solubility resistance to HCFC or HFC is generally decreased.

When Mn of the phenol resin is less than 650, any of the polyurethane resin derived from the reaction with organic polyisocyanate has a tendency to dissolve in HCFC and HFC.

On the other hand when Mn of the phenol resin exceeds 1400, this leads to high viscosity in any mixing ratio, poor dispersibility in HCFC and HFC and inferior operation efficiency in reaction, with organic polyisocyanate.

The suitable polyol a for use in the invention is obtained by the addition of 1.0 to 4.5 moles of alkylene oxide to 1 equivalent of the hydroxyl group in the phenol resin. Alkylene oxide of less than 1.0 mole, that is, much amount of phenolic hydroxyl group remained causes unfavourable reduction of physical properties in the resulting polyurethane foam. On the other hand, alkylene oxide addition exceeding 4.5 mole eliminates resistance to HCFC or HFC of resulting polyurethane resin, although viscosity is reduced and dispersibility in HCFC and HFC becomes better.

When the phenol resin has an average functionality of less than 3, the resulting polyurethane resin made from polyol a and polyol b or polyol a and polyol c decreases in resistance to HCFC and HFC. On the other hand, average functionality exceeding 8 leads to a disadvantage of rendering the polyurethane resin brittle.

The alkanolamine for use in the invention includes, for example, monoethanolamine, diethanolamine, triethanolamine, monoisopropanolamine, diisopropanolamine and triisopropanolamine.

A suitable polyol b used in the invention is obtained by the addition of 0.5 to 3.0 moles of alkylene oxide to 1 equivalent of active hydrogen in the alkanolamine.

When the amount of alkylene oxide is less than 0.5 mole per equivalent of active hydrogen of alkanolamine, crosslinking activity of alkanolamine remains and hence deteriorates physical properties of resulting polyurethane foam. When the amount of alkylene oxide exceeds 3.0 moles, this also decreases foam properties and the resulting polyurethane foam cannot be particularly used.

The polyols a and b used in the invention are used in a mixing ration a/b of 0.25 to 4.0 by weight. When the mixing ratio exceeds 4.0 this causes high viscosity, poor dispersibility and solubility in HCFC and HFC, and also leads to unfavourable operation problems on the preparation of polyurethane resin. On the other hand, a mixing ratio less than 0.25 is unsuitable because of inferior properties of resulting polyurethane foams and a deterioration of resistance to dissolving in HCFC or HFC.

A suitable aliphatic polyhydroxy compound used for the preparation of polyol c is a single compound or a mixture of two or more selected from ethylene glycol, diethylene glycol, propylene glycol, dipropylene glycol, butanediol, neopentyl glycol, cyclohexane dimethanol, cyclohexane tetramethanol, glycerol,

trimethylolethane, trimethylolpropane, pentaerythritol, methylglucoside, sorbitol, mannitol, dulcitol and sucrose.

Alkylene oxide addition of less than 0,8 mole make the resultant polyurethane foam brittle. On the other hand, addition exceeding 6.5 moles lowers resistance of HCFC and HFC if the polyurethane resin obtained.

The polyols a and c which are initiated with the phenol resin and aliphatic polyhydroxy compound, respectively, are mixed in the ratio a/c of 0.1 to 4.0 by weight. A mixing ratio less than 0.1 reduces resistance to HCFC to HFC of polyurethane resin prepared by reacting in the presence of a catalyst. On the other hand, a mixing ration exceeding 4.0 leads to a disadvantage of poor operation efficiency due to too high viscosity in the preparation of polyurethane resin.

Aminophenol base polyol B consist of polyol d having a hydroxyl value of from 150 to 700 mgKOH/g and polyol b or polyol d and the polyol c.

Exemplary suitable aminophenol compounds include aminophenol, aminocresol, aminothylphenol, aminobutylphenol, aminorescorcinol, aminopyrocatechol, aminohydroquinone, aminohomocatechol, aminocresorcinol, aminoorcinol, diaminophenol, and diaminocaresol.

The aminophenol base polyol B comprises a polyol d and a polyol b or a polyol d and a polyol c in a d/b ratio of from 0.25 to 4.0 by weight or a d/c ratio of from 0.1 to 4.0 by weight. The reason for the selection of these mixing ratios is the same as the mixing ratio a/b and a/c in the case of phenol resin base polyol A.

Polyol D consists of phenol resin based polyol A and aminophenol base polyol B in an A/B ratio of from 0.25 to 4.0 by weight and has a hydroxyl value of from 180 to 700 mgKOH/g. If the A/B ratio deviates from the range of 0.25 to 4.0 this leads to inferior properties of the foam.

The polyol E comprises afore-mentioned phenol resin base polyol A and polyphenylpolyxylylenepolyamine based polyol C. Polyphenylpolyxylylenepolyamine based polyol C comprises a polyol e having a hydroxyl value of from 150 to 700 mgKOH/g and polyol b or polyol b and ppolyol c described above.

The polyphenylpolyxylyenepolyamine based polyol includes, for example, α , α '-bis (4-aminophenyl)-xylene, polyphenylpolyxylylenepolyamine, mixture thereof derivatives, insomer and obligomer of these compounds.

When the amount of alkylene oxide is less than 1.0 mol per equivalent of the amino group, that is when many amino groups remain, control of foaming reaction becomes difficult and the resulting polyurethane foam unfavourably deteriorates physical properties. On the other hand, alkylene oxide addition exceeding 9.0 moles leads to inferior physical properties, although viscosity is reduced and dispersing ability into HCFC and HFC becomes better.

The alkanolamine which can be used has been described above.

The polyol b used in the invention is obtained by the addition of 0.5 to 3.0 moles of alkylene oxide to 1 equivalent of active hydrogen in the alkanolamine. When the amount of alkylene oxide is less than 0.5 mole per equivalent of active hydrogen of alkanolamine, crosslinking activity of alkanolamine remains and hence deteriorates physical properties resulting polyurethane foam. When the amount of alkylene oxide exceeds 3.0 moles, this also decreases foam properties even in a polyol mixing ration e/b of above 4.0 and the resulting polyurethane foam cannot be practically used.

The polyols e and b used in a mixing ratio e/b of 0.25 by weight. A mixing ratio exceeding 4.0 causes high viscosity and poor dispersibility in HCFC and HFC and also leads to unfavourable operation problems on the preparation of polyurethane resin. On the other hand, a mixing ratio less than 0.25 is unsuitable because of inferior properties of resulting polyurethane foams.

The aliphatic polydroxy compound which can be used has been described above.

Polyphenylpolyxyxylenepolyamine initiated polyol e and aliphatic polyhydroxy compound initiated polyol c are preferably mixed in a e/c ratio of from 0.1 to 4.0 by weight. A ratio less than 0/.1 lowers resistance to dissolving in HCFC and HFC of polyurethane resin prepared in the presence of a catalyst. On the other hand, a ratio exceeding 4.0 causes too high viscosity of resulting mixture and hence has a disadvantage of poor operation efficiency in the production of polyurethane resin.

Polyol E is obtained by mixing polyol A and polyol C in a A/C ratio of from 0.25 to 4.0 by weight and has a hydroxyl value of from 180 to 700 mgKOH/g. A ratio A/C deviated from the range of from 0.25 to 4.0 leads to inferior properties of the polyurethane foam obtained by using HCFC and/or HFC as foaming agents.

Polyol G consists of the said phenol resin base polyol A and a polyphenylpolymethylenepolyamine based polyol F.

The relationships among the mixing ratio of f/b, f/c and A/F, hydroxyl value of mixed polyols, physical properties of polyurethane, operation efficiency and effect of combination use of polyol A and polyol F is

the same as that of polyol D and poloyl E.

Suitable polymethylenepolyphenylpolyamines include, for example, polymethylenepolyphenylpolyamine, which is used commonly as a raw material of polymethylenepolyphenylpolyisocyanate, 4,4'-diaminodiphenylmethane which is separated from the polymethylenepolyphenylpolyamine, its isomer or mixture of these isomers.

The catalyst which can be used for the addition reaction of alkylene oxide to a single compound or mixture of phenol resin, alkanolamine series compound, aliphatic polyhydroxy compound, aminophenol series compound, polyphenylpoly xylylenepolyamine and polymethylenepolyphenylpolyamine as a starting materials is an amine catalysts or an alkali metal hydroxide catalyst.

The amine catalyst is represented by the formula (V) or the formula (VI)

$NR_4 R_4 R_5$ (V)

$R_4 R_5 N(CH_2)_t NR_4 R_5$ (VI)

where $R_4$ is a hydrogen atom or an alkyl group having from 1 to 6 carbon atoms, hydroxyethyl or hydroxyisopropyl, $R_5$ is a hydrogen atom or an alkyl group having from 1 to 4 carbon atoms hydroxyethyl and hydroxyisopropyl, t is an integer of from 1 to 6, but $R_4$ and $R_5$ cannot be hydrogen atoms at the same time in the formula ( V )

Exemplary amine compounds include dibutylamine, ethylenediamine, tetramethylenediamine, monoethyanolamine, diethanolamine, triethanolamine, isopropanolamine, triethylamine, tri-n-propylamine, di-n-propylamine, n-propylamine, n-amylamine, N,N-dimethylethanolamine, isobutylamine, isoamylamine and methyldiethylamine.

Alkali metal hydroxide can also be used as the catalyst for the above addition reaction. Representative examples of alkali metal hydroxide include lithium hydroxide, sodium hydroxide, potassium hydroxide, magnesium hydroxide, calcium hydroxide and barium hydroxide.

The above amine and alkali metal hydroxide catalysts can be used singly or in combination.

The amount of the above catalysts used from 0.1 to 2.0 parts by weight per 100 parts by weight of the sum of above starting materials having active group such as amino group or active hydrogen. When alkali metal hydroxide catalyst is used, the reacted solution is neutralized by acid solution such as phosphoric acid aqueous solution.

The polyol of the present invention can be prepared by charging in an autoclave, the catalyst and a single starting material or a mixture theoreof selected from phenol resin, alkanolamine, aliphatic polyhydroxy compound, polyphenylpolyxylylenepolyamine series compund, and polymethylenepolyphenylpolyamine and then gradually feeding an alkylene oxide to conduct addition reaction. Preferred reaction temperature is 90 to 130 °C. At a temperature lower than 90 °C it is difficult for the reaction to progress. On the other hand, a temperature exceeding 130 °C is liable to cause side reactions. When the above starting material is used singly, each polyol thus obtained can be subsequently blended in a prescribed amount.

The polyol used in the present invention can be prepared by using a starting material singly or a mixture of it. In the case where the polyol prepared from the single material leads to high viscosity and poor operation efficiency, it is preferred to prepare the polyol by using a mixture of the starting material corresponding to each component of the desired polyol.

In the examples of the invention, each polyol a, b, c, d, e or (f) is separately synthesized by using the starting material singly and followed by mixing these polyols to prepare component polyols A, B, C, and F. Thereafter polyols D, E and G are prepared by mixing the component polyols.

No particular restriction is imposed upon the organic polyisocyanate for use in the process of the invention.

Conventionally known organic polyisocyanates, for example, aromatic, aliphatic and alicyclic polyisocyanates and their modified products can be used. Exemplary polyisocyanates which are suitable for use include phenylendiisocyanate, diphenylmethane diisocyanate, crude diphenylmethane diisocyanate, tolylene diisocyanate, crude tolylene diisocyanate, xylylene diisocyanate, hexamethylene diisocyanate, isophorone diisocyanate, hydrogenated diphenylmethane diisocyanate, hydrogenated tolylene diisocyanate, triphenylmethane triisocyanate, tolylene triisocyanate, polymethylenepo lyphenylpolyisocyanate, modified polyisocyanates such as carbodiimide modified diphenylmethane diisocyanate, and isocyanate terminated prepolymers which can be obtained by reacting the above polyisocyanate with the low molecular polyol or polymer polyol in a NCO/active hydrogen equivalent ratio of from 2 to 20 and have an isocyanate content of from 5 to 35% by weight.

These polyisocyanates can be used singly or in combination.

The equivalent ratio of the polyisocyanate to the hydroxyl group in the resin premix is in the range of from 0.8 to 5.0. An equivalent ratio exceeding 5.0 leads to unreacted polyisocyanate remained. On the other hand, an equivalent ratio less than 0.8 results in unreacted polyol remaining. Hence the above range is preferable.

The foaming agent for use in the invention is HCFC and HFC.

Exemplary HCFC include 2,2-dichloro-1,1,1-trifluoroethane (HCFC-123), 1,1-dichloro-1-fluoroethane (HCFC-141b) 1-chloro-1, 1-difluoroethane (HCFC-142b)and monochlorodifluoromethane (HCFC-22). Representative HFC includes 1,1,1,2-tetrafluoroethane (HFC-134a) and 1,1-difluoroethane (HFC-152a). These foaming agents can be used singly or in combination.

When necessary, water and/or a hydrocarbon having a boiling point of from 10 to 50 °C, and other auxiliary foaming agent can be used in combination.

Water is usually used in an amount of from 0.5 to 5.0 parts by weight per 100 parts by weight of the resin premix. An exemplary low hydrocarbons is methylene chloride. Conventional CFC can also be used in combination.

The foaming catalyst which can be used for the rigid polyurethane foam, preparation of the invention includes, for example, amine calayst such as triethylamine, tripropylamine, triisopropanolamine, tributylamine, trioctylamine, hexadecyldimethylamine, N-methylmorpholine, N-ethylmorpholine, N-octadecylmorpholine, monoethanolamine, diethanolamine, triethanolamine, N-methyldiethanolamine, N,N-dimethylethanolamine, diethylenetriamine, N,N,N',N'-tetramethylethylenediamine, N,N,N',N'-tetramethylpropylenediamine, N,N,N',N'-tetramethylbutanediamine, N,N,N',N'-tetramethyl-1,3-butanediamine, N,N,N',N'-tetramethylhexamethylenediamine, bis [2-(N,N-dimethylamino)ethyl] ether, N,N-dimethylbenzylamine, N,N-dimethylcyclohexylamine, N,N,N',N'',N''-pentamethyldiethylenetriamine, triethylenediamine, formic acid and other acid salts of triethylenediamine, oxyalkylene adducts of primary and secondary amines, aza ring compounds such as N,N-dialkylpiperazine, and various N,N',N''-trialkylaminoal kylhexahydrotriazines such as β-aminocarbonyl catalyst disclosed in Japanese TOKKO SHO 52-043517 (1977) and β-aminonitrile catalyst disclosed in Japanese TOKKO SHO 53-014279 (1978); and organometallic catalysts such as tin acetate, stannous octoate, stannous oleate, stannous laurate, dibutyltin diacetate, dibutyltin dilaurate, dibutyltin dichloride, lead octoate, lead naphthenate, nickel naphthenate and cobalt naphthenate.

These catalyst can be used singly or in combination. The amount of the catalyst for use is in the range of from 0.0001 to 10.0 parts by weight per 100 parts of the polyol.

The cell regulator for use in the present invention is a conventionally known organic silicone surfactant. Exemplary foam regulators include products of Nippon Unicar Co., Ltd. which are L-520, L-540, L-5340, L-5410, L-5420, L-5710 and -5720, products of Toray Silicone Co., Ltd. which are SH-190, SH-192, SH-193, SH-194, and SH-195, products of Shinetsu Silicone Co., Ltd. which are F-305, F-306, F-317, F-341 and F-345, and a product of Toshiba Silicone Co., Ltd. which is TFA-4200.

The amount of the cell regulator used is in the range of from 0.1 to 20 parts by weight per 100 parts by weight of the sum of the polyol and the organic polyisocyanate.

Flame retardants which can be used are tris(2-chloroethyl) phosphate tris(dichloropropyl) phosphate, tris(dibromopropyl) phosphate, products of Daihachi Chemical Co., Ltd which are CR-505 and CR-507, and a product of Akzo Japan Co., Ltd. which is Fyrol-6.

Other additives usually employed in polyurethane, for example, plasticizer, fillers, stabilizers, such as antioxidants, ultraviolet absorbers and colorants can also be added, if necessary.

In the case of preparing the polyurethane resin, the polyol D, E or G, catalyst, stabilizer, organic polyisocyanate and other additives are mixed rapidly according to the formulation and poured into a mold, then are cured in room temperature. In the case of preparing the rigid polyurethane foam, the polyol, catalyst, cell regulator, flame retardant afore-mentioned foaming agent and other additives are mixed in a prescribed amount to foam a premix.

Using a polyurethane dispensing machine, the resin premix is rapidly and continuously mixed with the organic polyisocyanate at a constant ratio so as to obtain a NCO/active hydrogen equivalent ratio of from 0.8 to 5.0.

The mixture obtained is successively poured into a cavity or a mould. After pouring, liquid raw material of the rigid polyurethane foam is formed and cured in a serveral minutes.

The rigid polyurethane foam obtained in the present invention is used for the heat-insulation material or structural material of refrigerators, heat-insulating panels, ships and vehicles.

Example

The present invention will hereinafter be illustrated further in detail by way of examples and comparative examples.

[Polyol preparation]

Reference Example 1

To a 21 autoclave, 500g of novolak resin #2000, a product of Mitsui Toatsu Chemicals, Inc. illustrated in Table 1, was charged. The internal atmosphere of the autoclave was replaced with nitrogen. The autoclave was then heated to 120 °C, 2.3 g of triethylamine was added, and successively 274g of propylene oxide was gradually charged. After reacting for 3 hours unreacted propylene oxide was removed from the reaction system. Polyol (a-1) thus obtained was 720g and had a hydroxyl value of 339 mgKOH/g.

Reference Example 2~9

Polyols (a-2~a-9) indicated in Table 2 were prepared by carrying out the same procedure as described in Reference Example 1, excepting the change of raw material formulation as indicated in Table 2. Hydroxyl values of polyols prepared were indicated in Table 2.

Reference Example 10~18

Polyols (b-1~b-7, c-1 and c-2) indicated in Table 3 were prepared by carrying out the same procedure as described in Reference Example 1, excepting the change of phenol resin in Reference Example 1 with triethanolamine, glycerol or trimethyrolpropane in Reference Examples 10~18, and the change of raw material formulation as indicated in Table 3.

Hydroxyl values of these polyols were indicated in Table 3.

Preparation of phenol resin base polyol (A)

Reference Examples 19~27

Polyol (A-1~A-9) was prepared by using the polyol (a), (b) and(c) prepared in Reference Examples 1~9 in Table 2 and Reference Examples 10~18 in Table 3.

Phenol resin base polyol (A-1~A-9) were prepared by the formulation indicated in Table 4. Hydroxyl values and viscosity values of these polyols were indicated in Table 4.

Reference Example 28~32

Polyols (d-1~d-5)indicated in Table 5 were prepared by carrying out the same procedure as discribed in Reference Example 1 excepting the change of phenol resin in Reference Example 1 with p-aminophenol and the change of raw material formulation as indicated in Table 5.

Hydroxyl values of these polyols were indicated in Table 5.

Reference Examples 33~37

Polyols (b-8~b-10, c-3 and c-4) indicated in Table 6 were prepared by carrying out the same procedure as described in Reference Example 1 excepting the change of phenol resin in Reference Example 1 with triethanolamine or glycerol and the change of raw material formulation as indicated in Table 6. Hydroxyl values of these polyols were indicated in Table 6.

Preparation of aminophenol base polyol (B)

Reference Examples 38~42

Aminophenol base polyols (B-1~B-5) were prepared by using the polyol (d), (b) and (c) prepared in Reference Examples 28~32 in Table 5 and Reference Examples 33~37 in Table 6. Aminophenol base

polyoles (B-1~B-5) were prepared by the formulation indicated in Table 7. Hydroxyl values of these polyols were indicated in Table 7.

Reference Example 43~48

Polyols (e-1~e-6) indicated in Table 8 were prepared by carrying out the procedure as described in Reference Example 1 excepting the change of phenol resin in Reference Example 1 with polyphenylpolyxylylenepolyamine, and the change of raw material formulation as indicated in Table 8.

Hydroxyl values of these polyols were indicated in Table 8.

Reference Example 49~54

Polyols (b-11~b-13 and c-5~c-7) indicated in Table 9 were prepared by carrying out the procedure as described in Reference Example 1 excepting the change of phenol resion in Reference Example 1 with triethanolamine or glycerol, and the change of raw material formulation as indicated in Table 9.

Hydroxyl values of these polyols were indicated in Table 9.

Preparation of polyphenylpolyxylylenepolyamine base polyol (C)

Reference Example 55~60

Polyphenylpolyxylylenopolyamine base polyols (C-1~C-6) were prepared by using the polyol (e), (b) and (c) prepared in Reference Examples 43~48 in Table 8 and Reference Examples 49~54 in Table 9, according to the formulation indicated in Table 10. Hydroxyl values and viscosity values of these polyols were indicated in Table 10.

Examples 1~11

Polyol (D) and (E) indicated in Examples 1~11 were prepared according to the formulation indicated in Table 11 by using phenol resin base polyols (A-1~A-9) indicated in Table 4, aminophenol base polyols (B-1~B-5) indicated in Table 7 and polyphenylpolyxylylenepolyamine base polyols (C-1~C-6) indicated in Table 10.

Hydroxyl values and viscosity values of these polyols abtained were indicated in Table 11.

Reference Example 61~66

Polyols (f-1~f-6) indicated in Table 12 were prepared by carring out the same procedure as described in Reference Example 1, excepting the change of phenol resin in Reference Example 1 with polymethylenepolyphenylpolyamine. Hydroxyl values of these polyols were indicated in Table 12.

Reference Example 67~72

Polyols (b-14, b-15 and c-8~c-11) indicated in Table 13 were prepared by carrying out the same procedure as described in reference Example 1, excepting the change of phenol resin in Reference Example 1, with triethanolamine, glycerol or pentaerythritol, and the change of raw material formulation as indicated in Table 13. Hydroxyl values of these polyol were indicated in Table 13.

Reference Example 73~78

Polyphenylpolyxylylenepolyamine base polyols (F) were prepared by using the polyols (f), (b) and (c) prepared in Reference Examples 61~66 indicated in Table 12 and Reference Examples 67~72 in Table 13, according to the formulation indicated in Table 14. Hydroxyl values and viscosity values of polyols thus obtained were indicated in Table 14.

Preparation of polymethylenepolyphenylpolyamine base polyol (F)

Reference Examples 79~84

Polyols (G-1~G-6) indicated in Table 15 were prepared according to the formulation indicated in Table 15 by using phenol resin base polyol (A-1~A-3, A-5, A-6 and A-9) indicated in Table 4 and polymethylenepolyphenylpolyamine base polyols (F-1~F-6). Hydroxyl values and viscosity values of these polyols obtained were indicated in Table 15.

Table 1

Physical Properties of Novolak Resin and Phenol Base Resin

| No. | Grade (*) (Product of MITSUI TOATSU CHEMICALS, INC.) | Number average molecular weight (Mn) | Average functionality | Softening point (℃) |
|---|---|---|---|---|
| (1) | 1000HS | 867 | 7.70 | 115 |
| (2) | 2000 | 723 | 6.37 | 95 |
| (3) | 9000 | 654 | 5.62 | 93 |
| (4) | Cresol/Novolak type | 815 | 6.71 | 103 |
| (5) | Bisphenol A/Nonylphenol type | 1032 | 5.18 | 121 |

Table 2

| Reference Example No. | 1 | 2 | 3 | 4 | 5 | 6 | 7 | 8 | 9 |
|---|---|---|---|---|---|---|---|---|---|
| Polyol (a) | a-1 | a-2 | a-3 | a-4 | a-5 | a-6 | a-7 | a-8 | a-9 |
| Phenol resin (No.: Table 1) (g) | 500 (2) | 500 (3) | 500 (2) | 500 (4) | 500 (5) | 500 (1) | 500 (2) | 500 (2) | 500 (3) |
| Propylene oxide (g) | 274 | 547 | | 305 | 320 | 1231 | 821 | 300 | 547 |
| Ethylene oxide (g) | | | 537 | | | | | | |
| Alkylene oxide addition amount (mol/OHEq.) | 1.0 | 1.9 | 2.8 | 1.2 | 1.9 | 4.4 | 3.1 | 1.1 | 1.9 |
| OH-value (mgKOH/g) | 339 | 250 | 204 | 295 | 182 | 153 | 198 | 320 | 250 |

Note: Eq: Equivalent
OH-value: Hydroxyl value (JIS K 1557)

Table 3

| Reference Example No. | 10 | 11 | 12 | 13 | 14 | 15 | 16 | 17 | 18 |
|---|---|---|---|---|---|---|---|---|---|
| Polyol (b) or (c) | b-1 | b-2 | b-3 | b-4 | b-5 | b-6 | b-7 | c-1 | c-2 |
| Triethanolamine (g) | 500 | 500 | 500 | 500 | 500 | 500 | 250 | | |
| Glycerol (g) | | | | | | | | 500 | |
| Trimethylolpropane (g) | | | | | | | | | 500 |
| Sucrose (g) | | | | | | | 250 | | |
| Propylene oxide (g) | 821 | 1348 | | 821 | 706 | 1752 | 3530 | 832 | 4230 |
| Ethylene oxide (g) | | | 268 | | | | | | |
| Alkylene oxide addition amount (mol/OHEq.) | 0.5 | 2.1 | 0.6 | 0.5 | 1.1 | 2.9 | 4.1 | 0.8 | 6.2 |
| OH-value (mgKOH/g) | 718 | 327 | 661 | 718 | 496 | 253 | 207 | 730 | 141 |

Table 4 Phenol Resin Base Polyol (A)

| Reference Example No. | 19 | 20 | 21 | 22 | 23 | 24 | 25 | 26 | 27 |
|---|---|---|---|---|---|---|---|---|---|
| Mixed polyol (A) | A-1 | A-2 | A-3 | A-4 | A-5 | A-6 | A-7 | A-8 | A-9 |
| Polyol (a) | a-1 | a-2 | a-3 | a-4 | a-5 | a-6 | a-7 | a-8 | a-9 |
| Polyol (b) or (c) | b-1 | b-2 | b-3 | b-4 | b-5 | b-6 | b-7 | c-1 | c-2 |
| Mixing ratio (a)/ (b) or (a)/ (c) (weight) | 1.0 | 0.43 | 1.0 | 1.0 | 0.67 | 1.5 | 1.0 | 1.5 | 3.0 |
| OH-value (mgKOH/g ) | 532 | 298 | 465 | 507 | 370 | 193 | 460 | 245 | 240 |
| Viscosity ( CP/25 ℃) | 19700 | 9670 | 13000 | 19700 | 30300 | 18900 | 6300 | 4900 | 9750 |

Note: OH-value: Hydroxyl value (JIS K 1557)
Viscosity: JIS K 1557
Eq.: Equivalent

Table 5

| Reference Example No. | 28 | 29 | 30 | 31 | 32 |
|---|---|---|---|---|---|
| Polyol (d) | d − 1 | d − 2 | d − 3 | d − 4 | d − 5 |
| P-Aminophenol (g) | 327 | 327 | 218 | 218 | 373 |
| Propylene oxide (g) | 522 | 1044 | 1044 | 1566 | |
| Ethylene oxide (g) | | | | | 792 |
| Alkylene oxide addition amount (mol/OHEq.) | 1.0 | 2.0 | 3.0 | 4.5 | 2.0 |
| OH-value (mgKOH/g) | 595 | 368 | 267 | 189 | 451 |

Table 6

| Reference Example No. | 33 | 34 | 35 | 36 | 37 |
|---|---|---|---|---|---|
| Polyol (b) or (c) | c-3 | c-4 | b-8 | b-9 | b-10 |
| Triethanolamine (g) | | | 745 | 745 | 298 |
| Glycerol (g) | 92 | 276 | | | 92 |
| Propylene oxide (g) | 1131 | 654 | 453 | 870 | 1044 |
| Ethylene oxide (g) | | | | | |
| Alkylene oxide addition amount (mol/OHEq.) | 6.5 | 2.0 | 1.0 | 0.5 | 3.0 |
| OH-value (mgKOH/g) | 137 | 382 | 713 | 521 | 251 |

Table 7 Aminophenol Base Polyol (B)

| Reference Example No. | 38 | 39 | 40 | 41 | 42 |
|---|---|---|---|---|---|
| Mixed polyol (B) | B-1 | B-2 | B-3 | B-4 | B-5 |
| Polyol (d) | d-1 | d-2 | d-3 | d-4 | d-5 |
| Polyol (b) or (c) | c-3 | c-4 | b-8 | b-9 | b-10 |
| Mixing ratio (d)/ (b) or (d)/ (c) (weight) | 0.2 | 4.0 | 0.25 | 4.0 | 0.5 |
| OH-value (mgKOH/g ) | 214 | 370 | 625 | 255 | 320 |
| Viscosity ( CP/25 ℃) | 700 | 7200 | 890 | 4800 | 3300 |

Table 8

| Reference Example No. | 43 | 44 | 45 | 46 | 47 | 48 |
|---|---|---|---|---|---|---|
| Polyol (e) | e − 1 | e − 2 | e − 3 | e − 4 | e − 5 | e − 6 |
| Polyphenylpolyxylylenepolyamine (g) | 895 | 895 | 448 | 895 | 448 | 895 |
| Propylene oxide (g) | 327 | 654 | 654 | 654 | 1473 | |
| Ethylene oxide (g) | | | | | | 497 |
| Alkylene oxide addition amount (mol/OHEq.) | 1.0 | 2.0 | 4.0 | 2.0 | 9.0 | 2.0 |
| OH-value (mgKOH/g) | 518 | 408 | 287 | 408 | 164 | 455 |

Note: Polyphenylpolyxylylenepolyamine: Anilix®, a product of Mitsui Toatsu Chemicals, Inc.

Table 9

| Reference Example No. | 49 | 50 | 51 | 52 | 53 | 54 |
|---|---|---|---|---|---|---|
| Polyol (b) or (c) | c − 5 | c − 6 | b − 11 | c − 7 | b − 12 | b − 13 |
| Glycerol (g) | 92 | 460 | | 276 | | |
| Triethanolamine (g) | | | 1043 | | 1043 | 1043 |
| Propylene oxide (g) | 1131 | 696 | 609 | 1044 | 609 | 609 |
| Ethylene oxide (g) | | | | | | |
| Alkylene oxide addition amount (mol/OHEq.) | 6.5 | 0.8 | 0.5 | 2.0 | 0.5 | 0.5 |
| OH-value (mgKOH/g) | 137 | 727 | 713 | 382 | 713 | 713 |

Table 10 Polyphenylpolyxylylenepolyamine Base Polyol (C)

| Reference Example No. | 55 | 56 | 57 | 58 | 59 | 60 |
|---|---|---|---|---|---|---|
| Mixed polyol (C) | C−1 | C−2 | C−3 | C−4 | C−5 | C−6 |
| Polyol (e) | e-1 | e-2 | e-3 | e-4 | e-5 | e-6 |
| Polyol (b) or (c) | c-5 | c-6 | b-11 | c-7 | b-12 | b-13 |
| Mixing ratio (e)/ (b) or (e)/ (c) (weight) | 4.0 | 2.0 | 0.25 | 0.10 | 0.5 | 3.0 |
| OH-value (mgKOH/g ) | 441 | 514 | 628 | 384 | 536 | 519 |
| Viscosity ( CP/25 °C) | 22500 | 10700 | 3800 | 4200 | 7500 | 21500 |

Table 11 Polyol (D) and (E)

| Example No. | 1 | 2 | 3 | 4 | 5 | 6 | 7 | 8 | 9 | 10 | 11 |
|---|---|---|---|---|---|---|---|---|---|---|---|
| Polyol No. | D−1 | D−2 | D−3 | D−4 | D−5 | E−1 | E−2 | E−3 | E−4 | E−5 | E−6 |
| Polyol (A) | A−6 | A−2 | A−5 | A−3 | A−1 | A−6 | A−2 | A−5 | A−3 | A−1 | A−9 |
| Polyol (B) or (C) | B−1 | B−2 | B−3 | B−4 | B−5 | C−1 | C−2 | C−3 | C−4 | C−5 | C−6 |
| (A)/[(B)or(C)](weight) | 0.25 | 2.0 | 4.0 | 0.5 | 4.0 | 4.0 | 2.0 | 0.25 | 3.0 | 1.0 | 0.33 |
| OH-value(mgKOH/g) | 210 | 320 | 420 | 325 | 490 | 243 | 370 | 577 | 445 | 535 | 450 |
| Viscosity (CP/25°C) | 1300 | 8800 | 14000 | 7000 | 12000 | 20000 | 10200 | 5800 | 8200 | 12500 | 15800 |

Table 12

| Reference Example No. | 61 | 62 | 63 | 64 | 65 | 66 |
|---|---|---|---|---|---|---|
| Polyol (f) | f-1 | f-2 | f-3 | f-4 | f-5 | f-6 |
| Polymethylenepolyphenylpolyamine (g) | 594 | 594 | 198 | 594 | 792 | 530 |
| Propylene oxide (g) | 696 | 696 | 1044 | 348 | 464 | |
| Ethylene oxide (g) | | | | | | 590 |
| Alkylene oxide addition amount (mol/OHEq.) | 2.0 | 2.0 | 9.0 | 1.0 | 1.0 | 2.58 |
| OH-value (mgKOH/g) | 520 | 520 | 180 | 715 | 723 | 516 |

Note: Polymethylenepolyphenylpolyamine· MDA-150, a product of Mitsui Toatsu Chemicals, Inc.

Table 13

| Reference Example No. | 67 | 68 | 69 | 70 | 71 | 72 |
|---|---|---|---|---|---|---|
| Polyol (b) or (c) | c−8 | c−9 | c−10 | c−11 | b−14 | b−15 |
| Glycerol ( g) | 368 | 276 | 92 | | | |
| Pentaerythritol ( g) | | | | 384 | | |
| Triethanolamine ( g) | | | | | 596 | 596 |
| Propylene oxide ( g) | 696 | 1566 | 1131 | 1392 | 348 | 696 |
| Ethylene oxide ( g) | | | | | | |
| Alkylene oxide addition amount (mol/OHEq.) | 1.0 | 3.0 | 6.5 | 3.0 | 0.5 | 1.0 |
| OH-value (mgKOH/g) | 630 | 274 | 140 | 253 | 723 | 525 |

Table 14 Polymethylenepolyphenylpolyamine· Base Polyol (F)

| Reference Example No. | 73 | 74 | 75 | 76 | 77 | 78 |
|---|---|---|---|---|---|---|
| Mixed polyol (F) | F-1 | F-2 | F-3 | F-4 | F-5 | F-6 |
| Polyol (f) | f-1 | f-2 | f-3 | f-4 | f-5 | f-6 |
| Polyol (b) or (c) | c-8 | c-9 | c-10 | c-11 | b-14 | b-15 |
| Ratio (f)/(b) or (f)/(c) (weight) | 4.0 | 3.0 | 0.1 | 1.0 | 4.0 | 1.0 |
| OH-value (mgKOH/g ) | 540 | 460 | 144 | 404 | 720 | 521 |
| Viscosity ( CP/25 ℃) | 5000 | 16500 | 11200 | 22500 | 23000 | 19400 |

Table 15 Polyol (G)

| Reference Example No. | 79 | 80 | 81 | 82 | 83 | 84 |
|---|---|---|---|---|---|---|
| Polyol No. | G-1 | G-2 | G-3 | G-4 | G-5 | G-6 |
| Polyol (A) | A-6 | A-2 | A-5 | A-3 | A-1 | A-9 |
| Polyol (F) | F-1 | F-2 | F-3 | F-4 | F-5 | F-6 |
| (A) / (F) (weight) | 4.0 | 0.67 | 0.25 | 1.0 | 0.25 | 3.0 |
| OH-value (mgKOH/g ) | 262 | 395 | 190 | 475 | 685 | 310 |
| Viscosity ( CP/25 ℃) | 18000 | 13100 | 14000 | 21000 | 22500 | 12500 |

[Polyurethane resin Preparation](Examples 12~22)

Polyurethane resin was prepared by reacting 30.0 g of a polyol obtained in examples or comparative examples, an organic polyisocyanate MDI-CR (a product of Mitsui Toatsu Chemicals, Inc.) having NCO content of 31.0 %, and 0.10 g of amine catalyst Kaolizer No. 1 (Trademark, a product of Kao Co. Ltd.) at room temperature according to the formulation illustrated in Table 16.

CFC or HCFC absorption was measured on the polyurethane resin thus obtained. Results are illustrated in Table 16.

[Rigid polyurethane foam preparation] (Examples 23~39)

To 100 g of the polyol thus obtained in the examples and comparative examples, 1.5 g of water, 1.5 g of silicone surfactant L-5420 (a product of Nippon Unicar Co., Ltd.), amine catalyst Kaolizer No. 1 (a product of Kao Co., Ltd.) and each amount of CFC or HCFC illustrated in Table 17 and 18 were added and mixed to obtain a premix. The premix thus obtained was mixed and reacted with each amount of polyisocyanate (MDI-CR, crude diphenylmethane diisocyanate, a product of Mitsui Toatsu Chemicals, Inc.) illustrated in the same table at the room temperature and poured into a mold to prepare a rigid polyurethane foam.

In the step of preparing the resin premix, mixing and dispersing ability (operation efficiency) between CFC or HCFC and polyol was observed and closed cell content of rigid polyurethane foam were measured. Results are illustrated in the same table.

As seen in Table 17 and 18, polyol(D), polyol(E) and polyol (G) which are respectively a mixture of phenol resin base polyol (A) and aminophenol base polyol (B) or polyphenylpolyxylylenepolyamine base

polyol (C) or polymethylenepolyphenylpolyamine base polyol (F) can maintain, in the polyurethane foam production using HCFC or HFC as a foaming agent, equivalent or better operation efficiency and foam propertied as compared with conventional foam production using CFC.

Table 16 Polyurethane Resin

| Example No. | 12 | 13 | 14 | 15 | 16 | 17 | 18 | 19 | 20 | 21 | 22 |
|---|---|---|---|---|---|---|---|---|---|---|---|
| Polyol No. | D-1 | D-2 | D-3 | D-4 | D-5 | E-1 | E-2 | E-3 | E-4 | E-5 | E-6 |
| Formulation (g) | | | | | | | | | | | |
| Polyol (D) or (E) | 30 | 30 | 30 | 30 | 30 | 30 | 30 | 30 | 30 | 30 | 30 |
| MDI-CR | 15.1 | 23.0 | 30.1 | 23.3 | 35.2 | 17.4 | 26.6 | 41.4 | 31.9 | 38.4 | 32.3 |
| Kaolizer No. 1 | 0.1 | 0.1 | 0.1 | 0.1 | 0.1 | 0.1 | 0.1 | 0.1 | 0.1 | 0.1 | 0.1 |
| Absorption (%) | | | | | | | | | | | |
| CFC-11(24hr) | 0.0 | 0.0 | 0.0 | 0.0 | 0.0 | 0.0 | 0.0 | 0.0 | 0.0 | 0.0 | 0.0 |
| HCFC-123(24hr) | 0.0 | 0.0 | 0.1 | 0.1 | 0.0 | 0.1 | 0.0 | 0.1 | 0.0 | 0.0 | 0.0 |
| HCFC-141b(24hr) | 0.0 | 0.0 | 0.0 | 0.0 | 0.0 | 0.1 | 0.0 | 0.0 | 0.0 | 0.0 | 0.0 |

Note:
MDI-CR: Crude diphenylmethanedii:socyanate a product of MITSUI TOATSU CHEMICALS, INC.
Kaolizer No. 1: Amine base catalyst, a product of Kao Comp.
Absorption: Weight increase rate of a specimen of polyurethane resin having dimensions of 40X40X7~17mm after immersion in 50 g of flon.

Table 17 Operation Efficiency in Foam Preparation and Closed Cell Content in Foam

| Reference Example No. | 23 | 24 | 25 | 26 | 27 | 28 | 29 | 30 | 31 | 32 | 33 |
|---|---|---|---|---|---|---|---|---|---|---|---|
| Polyol No. | D−1 | D−2 | D−3 | D−4 | D−5 | E−1 | E−2 | E−3 | E−4 | E−5 | E−6 |
| OH-value (mgKOH/g) | 210 | 320 | 420 | 325 | 496 | 243 | 370 | 577 | 445 | 535 | 450 |
| Viscosity (CP/25 ℃) | 1300 | 8800 | 14000 | 7000 | 12000 | 20000 | 10200 | 5800 | 8200 | 12500 | 15800 |
| Formulation (g) | | | | | | | | | | | |
| Polyol | 100 | ← | ← | ← | ← | ← | ← | ← | ← | ← | ← |
| $H_2O$ | 1.5 | ← | ← | ← | ← | ← | ← | ← | ← | ← | ← |
| L-5420 | 1.5 | ← | ← | ← | ← | ← | ← | ← | ← | ← | ← |
| Kaolizer No. 1 | 1.2 | 1.2 | 0.8 | 0.8 | 0.8 | 1.2 | 1.2 | 0.8 | 1.2 | 0.8 | 2.0 |
| Foaming agent | 27.0 | 31.3 | 35.3 | 31.5 | 38.0 | 28.3 | 33.3 | 40.6 | 36.3 | 39.8 | 36.4 |
| MDI-CR | 79.9 | 108.8 | 135.1 | 110.0 | 153.5 | 88.5 | 122.0 | 170.6 | 141.7 | 165.4 | 143.0 |
| Operation efficiency | | | | | | | | | | | |
| CFC-11(24hr) | | | | | | | | | | | |
| HCFC-123(24hr) | all good | | | | | | | | | | |
| HCFC-141b (24hr) | | | | | | | | | | | |
| Closed cell content (%) | | | | | | | | | | | |
| CFC-11(24hr) | 87.5 | 88.0 | 89.5 | 88.2 | 88.3 | 87.9 | 88.1 | 89.5 | 90.3 | 89.5 | 88.2 |
| HCFC-123(24hr) | 85.3 | 89.0 | 89.0 | 88.5 | 85.2 | 86.3 | 85.3 | 86.2 | 85.3 | 84.1 | 86.5 |
| HCFC-141b (24hr) | 87.5 | 88.2 | 87.3 | 86.3 | 85.4 | 86.3 | 86.5 | 86.6 | 85.3 | 88.2 | 88.2 |

Note: L-5420: Silicon surfactant ( a product of Nippon Unica Co. Ltd.)
Closed cell content: Beckmann air comparison hydrometer ( a product of Toshiba Beckmann Comp.)
Foaming agent: 3 foaming tests using CFC-11. HCFC-123 and HCFC-141b were carried out respectively according to the formulation in Table 17. Same amount of foaming agent was used. Operation efficiency and closed cell content of foams obtained were measured respectively. Table 18 is the same as Table 17.

Table 18 Operation Efficiency in Foam Preparation and Closed Cell Content in Foam

| Reference Example No. | 34 | 35 | 36 | 37 | 38 | 39 |
|---|---|---|---|---|---|---|
| Polyol No. | G－1 | G－2 | G－3 | G－4 | G－5 | G－6 |
| OH-value (mgKOH/g) | 262 | 395 | 190 | 475 | 685 | 310 |
| Viscosity ( CP/25 ℃) | 18000 | 13100 | 14000 | 21000 | 22500 | 12500 |
| Formulation ( g) | | | | | | |
| Polyol | 100 | ← | ← | ← | ← | ← |
| $H_2O$ | 1.5 | ← | ← | ← | ← | ← |
| L-5420 | 1.5 | ← | ← | ← | ← | ← |
| Kaolizer No.1 | 1.5 | 1.5 | 1.5 | 1.5 | 0.8 | 1.2 |
| Foaming agent | 29.0 | 34.3 | 26.2 | 37.4 | 45.7 | 30.9 |
| MDI-CR | 93.5 | 128.5 | 74.6 | 149.6 | 204.8 | 106.2 |
| Operation efficiency | | | | | | |
| CFC-11(24hr) | all good | | | | | |
| HCFC-123(24hr) | | | | | | |
| HCFC-141b (24hr) | | | | | | |
| Closed Cell Content (%) | | | | | | |
| CFC-11(24hr) | 88.5 | 89.3 | 89.0 | 88.0 | 88.5 | 90.1 |
| HCFC-123(24hr) | 86.5 | 87.5 | 88.0 | 88.0 | 87.0 | 88.5 |
| HCFC-141b (24hr) | 87.5 | 87.5 | 89.0 | 87.5 | 87.5 | 87.3 |

[Rigid polyurethane foam production] (continued) (Table 19~22)

Resin premix, was prepared according to the formulation illustrated in Tables 19~22. The premix was rapidly mixed at 5000 rpm for 6 seconds with a prescribed amount of an organic polyisocyanate as illustrated in above Tables. The mixture obtained was immediately poured into vertical, wooden boxes having dimensions of 200×200×200 mm and 380×380×35(thickness)mm.

The mixture was free foamed and thereafter allowed to stand for a day at room temperature.

Specimens having dimensions of 80×80×30mm in size were cut from the former mold and density, compressive strength, and low temperature dimentional stability were measured in accordance with JIS A 9514.

A specimens having dimensionds of 200×200×25mm in size were cut from the latter mold and heat conductivity were measured in accordance with JIS A 1412.

Results are illustrated in Tables 19~22.

(1) Preparation of rigid polyurethane foam composite having facing material

According to the above examples, preparation of a rigid polyurethane foam composite having facing material of the invention was carried out.

Polyols obtained in examples and comparative examples illustrated in Table 11 and Table 23 were used as the raw material of rigid polyurethane foams.

Table 19 Foam Property (Example 40 ~53, Comparative Example 1 ~7)

| | Com. Ex | Example | | Com. Ex | Example | | Com. Ex | Example | | Com. Ex | Example | | Com. Ex | Examplè | | Com. Ex | Example | | Com. Ex | Example | |
|---|---|---|---|---|---|---|---|---|---|---|---|---|---|---|---|---|---|---|---|---|---|
| | 1 | 40 | 41 | 2 | 42 | 43 | 3 | 44 | 45 | 4 | 46 | 47 | 5 | 48 | 49 | 6 | 50 | 51 | 7 | 52 | 53 |
| Raw material (g) | | | | | | | | | | | | | | | | | | | | | |
| MDI-CR | 79.9 | | | 108.8 | | | 135.1 | | | 110.1 | | | 153.5 | | | 135.1 | | | 135.1 | | |
| Polyol D-1 | 100 | | | | | | | | | | | | | | | | | | | | |
| Polyol D-2 | | | | 100 | | | | | | | | | | | | | | | | | |
| Polyol D-3 | | | | | | | 100 | | | | | | | | | 100 | | | 100 | | |
| Polyol D-4 | | | | | | | | | | 100 | | | | | | | | | | | |
| Polyol D-5 | | | | | | | | | | | | | 100 | | | | | | | | |
| $H_2O$ | 1.5 | | | 1.5 | | | 1.5 | | | 1.5 | | | 1.5 | | | 1.5 | | | 1.5 | | |
| L-5420 | 1.5 | | | 1.5 | | | 1.5 | | | 1.5 | | | 1.5 | | | 1.5 | | | 1.5 | | |
| Kaolizer No. 1 | 1.2 | | | 1.2 | | | 0.8 | | | 0.8 | | | 0.8 | | | 0.8 | | | 0.8 | | |
| Foaming agent | | | | | | | | | | | | | | | | | | | | | |
| CFC-11 | 30 | | | 31 | | | 35 | | | 32 | | | 23 | | | 35 | | | 35 | | |
| HCFC-141b | | 23 | | | 27 | | | 31 | | | 27 | | | 20 | | | 31 | | | 3.1 | |
| HCFC-123 | | | 32 | | | 38 | | | 42 | | | 38 | | | 28 | | | 39 | | | 39 |
| HFC-134a | | | | | | | | | | | | | | | | | | | | | |
| Isopentane | | | | | | | | | | | | | | | | | | 5 | | | 5 |
| Foam properties | | | | | | | | | | | | | | | | | | | | | |
| Density ( $kg/m^3$) | 25.5 | 24.9 | 25.8 | 24.3 | 24.0 | 24.8 | 25.2 | 25.0 | 25.5 | 24.2 | 23.9 | 24.5 | 25.3 | 25.0 | 25.3 | 25.2 | 25.0 | 26.0 | 25.2 | 25.0 | 25.9 |
| Compressive Strength ($kg/cm^2$) | 1.86 | 1.80 | 1.80 | 1.70 | 1.65 | 1.60 | 1.80 | 1.80 | 1.75 | 1.71 | 1.61 | 1.60 | 1.80 | 1.76 | 1.70 | 1.80 | 1.80 | 1.70 | 1.80 | 1.80 | 1.71 |
| Low temperature dimentional stability (% -30 ℃X24hr) | -0.1 | -0.3 | -0.3 | -0.1 | -0.2 | -0.3 | 0.0 | 0.0 | -0.2 | -0.1 | -0.2 | -0.4 | -0.2 | -0.2 | -0.3 | 0.0 | 0.0 | -0.4 | 0.0 | 0.0 | -0.3 |
| Heat conductivity (Kcal/mhr ℃) | 0.0160 | 0.0162 | 0.0165 | 0.0159 | 0.0159 | 0.0163 | 0.0160 | 0.0160 | 0.0163 | 0.0160 | 0.0161 | 0.0163 | 0.0160 | 0.0162 | 0.0163 | 0.0160 | 0.0160 | 0.0165 | 0.0160 | 0.0160 | 0.0165 |

Note: (1) Com. Ex: Comparative Example (2) Density: Free foaming

Table 20 Foam Property (Example 54~67, Comparative Example 8 ~14)

| | Com. Ex | Example | | Com. Ex | Example | | Com. Ex | Example | | Com. Ex | Example | | Com. Ex | Example | | Com. Ex | Example | | Com. Ex | Example | |
|---|---|---|---|---|---|---|---|---|---|---|---|---|---|---|---|---|---|---|---|---|---|
| | 8 | 54 | 55 | 9 | 56 | 57 | 10 | 58 | 59 | 11 | 60 | 61 | 12 | 62 | 63 | 13 | 64 | 65 | 14 | 66 | 67 |
| Raw material (g) | | | | | | | | | | | | | | | | | | | | | |
| MDI-CR | 88.5 | | | 122.0 | | | 170.6 | | | 141.7 | | | 165.4 | | | 141.7 | | | 141.7 | | |
| Polyol E-1 | 100 | | | | | | | | | | | | | | | | | | | | |
| Polyol E-2 | | | | 100 | | | | | | | | | | | | | | | | | |
| Polyol E-3 | | | | | | | 100 | | | | | | | | | | | | | | |
| Polyol E-4 | | | | | | | | | | 100 | | | | | | 100 | | | 100 | | |
| Polyol E-5 | | | | | | | | | | | | | 100 | | | | | | | | |
| $H_2O$ | 1.5 | | | 1.5 | | | 1.5 | | | 1.5 | | | 1.5 | | | 1.5 | | | 1.5 | | |
| L-5420 | 1.5 | | | 1.5 | | | 1.5 | | | 1.5 | | | 1.5 | | | 1.5 | | | 1.5 | | |
| Kaolizer No. 1 | 1.2 | | | 1.2 | | | 0.8 | | | 1.2 | | | 0.8 | | | 1.2 | | | 1.2 | | |
| Foaming agent | | | | | | | | | | | | | | | | | | | | | |
| CFC-11 | 28 | | | 33 | | | 41 | | | 36 | | | 40 | | | 36 | | | 36 | | |
| HCFC-141b | | 25 | | | 29 | | | 35 | | | 31 | | | 35 | | | 31 | | | 31 | |
| HCFC-123 | | | 34 | | | 40 | | | 49 | | | 44 | | | 48 | | | 40 | | | 40 |
| HFC-134a | | | | | | | | | | | | | | | | | | 5 | | | |
| Isopentane | | | | | | | | | | | | | | | | | | | | | 5 |
| Foam properties | | | | | | | | | | | | | | | | | | | | | |
| Density ( kg/m³) | 24.3 | 24.1 | 24.8 | 24.5 | 24.2 | 25.5 | 25.6 | 25.4 | 25.8 | 25.2 | 25.0 | 25.5 | 25.5 | 25.2 | 26.0 | 25.2 | 25.0 | 26.0 | 25.2 | 25.0 | 26.0 |
| Compressive Strength (kg/cm²) | 1.80 | 1.80 | 1.73 | 1.75 | 1.70 | 1.70 | 1.75 | 1.74 | 1.74 | 1.75 | 1.77 | 1.74 | 1.79 | 1.75 | 1.77 | 1.75 | 1.77 | 1.70 | 1.75 | 1.77 | 1.71 |
| Low temperature dimentional stability (% -30 °C×24hr) | -0.3 | -0.2 | -0.3 | 0.0 | -0.1 | -0.3 | -0.2 | -0.1 | -0.4 | -0.1 | -0.1 | -0.2 | -0.1 | 0.0 | -0.3 | -0.1 | -0.1 | -0.3 | -0.1 | -0.1 | -0.3 |
| Heat conductivity (Kcal/mhr °C) | 0.0160 | 0.0163 | 0.0164 | 0.0160 | 0.0162 | 0.0165 | 0.0162 | 0.0163 | 0.0165 | 0.0165 | 0.0166 | 0.0168 | 0.0158 | 0.0159 | 0.0162 | 0.0165 | 0.0166 | 0.0169 | 0.0165 | 0.0166 | 0.0169 |

Table 21 Foam Property (Example 68 ~81. Comparative Example 15~21)

| | Com. Ex | Example | | Com. Ex | Example | | Com. Ex | Examp | | Com. Ex | Example | | Com. Ex | Example | | Com. Ex | Example | | Com. Ex | Example | |
|---|---|---|---|---|---|---|---|---|---|---|---|---|---|---|---|---|---|---|---|---|---|
| | 15 | 68 | 69 | 16 | 70 | 71 | 17 | 72 | 73 | 18 | 74 | 75 | 19 | 76 | 77 | 20 | 78 | 79 | 21 | 80 | 81 |
| Raw material (g) | | | | | | | | | | | | | | | | | | | | | |
| MDI-CR | 93.5 | | | 128.5 | | | 74.6 | | | 149.6 | | | 204.8 | | | 149.6 | | | 149.6 | | |
| Polyol G-1 | 100 | | | | | | | | | | | | | | | | | | | | |
| Polyol G-2 | | | | 100 | | | | | | | | | | | | | | | | | |
| Polyol G-3 | | | | | | | 100 | | | | | | | | | | | | | | |
| Polyol G-4 | | | | | | | | | | 100 | | | | | | 100 | | | 100 | | |
| Polyol G-5 | | | | | | | | | | | | | 100 | | | | | | | | |
| $H_2O$ | 1.5 | | | 1.5 | | | 1.5 | | | 1.5 | | | 1.5 | | | 1.5 | | | 1.5 | | |
| L-5420 | 1.5 | | | 1.5 | | | 1.5 | | | 1.5 | | | 1.5 | | | 1.5 | | | 1.5 | | |
| Kaolizer No. 1 | 1.5 | | | 1.5 | | | 1.5 | | | 1.5 | | | 0.8 | | | 1.5 | | | 1.5 | | |
| Foaming agent | | | | | | | | | | | | | | | | | | | | | |
| CFC-11 | 29 | | | 34 | | | 26 | | | 37 | | | 31 | | | 37 | | | 37 | | |
| HCFC-141b | | 25 | | | 30 | | | 23 | | | 32 | | | 27 | | | 32 | | | 32 | |
| HCFC-123 | | | 35 | | | 41 | | | 31 | | | 45 | | | 37 | | | 40 | | | 40 |
| HFC-134a | | | | | | | | | | | | | | | | | | 5 | | | |
| Isopentane | | | | | | | | | | | | | | | | | | | | | 5 |
| Foam properties | | | | | | | | | | | | | | | | | | | | | |
| Density ( kg/m³) | 24.6 | 24.7 | 25.2 | 24.8 | 25.0 | 25.5 | 24.4 | 24.5 | 25.5 | 25.0 | 25.1 | 25.8 | 25.5 | 25.9 | 26.0 | 25.0 | 25.1 | 26.0 | 25.0 | 25.1 | 26.2 |
| Compressive Strength (kg/cm²) | 1.50 | 1.25 | 1.19 | 1.30 | 1.20 | 1.15 | 1.50 | 1.30 | 1.25 | 1.50 | 1.30 | 1.25 | 1.82 | 1.65 | 1.63 | 1.50 | 1.30 | 1.24 | 1.50 | 1.30 | 1.23 |
| Low temperature dimentional stability (% -30 °C×24hr) | -0.2 | -0.8 | -1.0 | -0.6 | -0.7 | -1.0 | -0.2 | -0.4 | -1.0 | -0.2 | -0.6 | -0.6 | -0.2 | -0.8 | -1.4 | -0.2 | -0.6 | -0.7 | -0.2 | -0.6 | -0.8 |
| Heat conductivity (Kcal/mhr °C) | 0.0165 | 0.0168 | 0.0170 | 0.0168 | 0.0170 | 0.0172 | 0.0163 | 0.0165 | 0.0167 | 0.0163 | 0.0166 | 0.0168 | 0.0159 | 0.0163 | 0.0161 | 0.0163 | 0.0166 | 0.0169 | 0.0163 | 0.0166 | 0.0169 |

Table 23

| Polyol No. | R-1 | R-2 |
| --- | --- | --- |
| Polyhydric alcohol | glycerol | glycerol, sucrose |
| Alkylene oxide | propylene oxide | propylene oxide |
| Hydroxyl value (mgKOH/g) | 450 | 450 |
| Viscosity (cp/25℃) | 480 | 8500 |

Table 22 Foam Property (Comparative Example 22 ~27)

| | Comparative Example | | | | | |
| --- | --- | --- | --- | --- | --- | --- |
| | 22 | 23 | 24 | 25 | 26 | 27 |
| Raw material (g) | | | | | | |
| MDI-CR | | 144 | | | 144 | |
| Polyol R-1 | | 100 | | | | |
| Polyol R-2 | | | | | 100 | |
| $H_2O$ | | 1.5 | | | 1.5 | |
| L-5420 | | 1.5 | | | 1.5 | |
| Kaolizer No. 1 | | 3.0 | | | 3.0 | |
| Foaming agent | | | | | | |
| CFC-11 | 37 | | | 37 | | |
| HCFC-141b | | 30 | | | 30 | |
| HCFC-123 | | | 44 | | | 44 |
| Foam properties | | | | | | |
| Density ( $kg/m^3$ ) | 24.5 | 25.1 | 25.2 | 25.0 | 25.2 | 25.3 |
| Compressive Strength ($kg/cm^2$) | 1.51 | 0.97 | 1.01 | 1.61 | 0.98 | 0.95 |
| Low temperature dimentional stability (% -30 ℃X24hr) | -0.5 | -3.6 | -5.8 | -1.0 | -4.5 | -7.5 |
| Heat conductivity (Kcal/mhr ℃) | 0.0170 | 0.0180 | 0.0185 | 0.0165 | 0.0180 | 0.0182 |

The facing material for use in the invention includes corrugated paper boards, laminated papers and other paper products, polyethylene, polypropylene, polyvinyl chloride and other synthetic resin plates; and aluminum, steel and other metal plates.

1) Polyurethane foam composite having one facing material(Table 24, 25)

The same formulations as illustrated in Table 24 were sprayed on a facing material under the following conditions to prepare a rigid polyurethane foam having one facing material. Properties of the product obtained are summarized in Table 25.

Atomizer : Model - FF Head D Gum

| | |
|---|---|
| | (a product of Gusmer Co., Ltd.) |
| Output pressure : | 50 kg/cm$^2$ |
| Liquid temperature : | 40 °C |
| Face material : | Corrugated paper board |

2) Preparation of rigid polyurethane foam having a plurality of facing material (Table 26, 27)

In the test, rigid polyurethane foam composite boards having two facing materials were prepared with a continuous process under the following conditions by using the formulations illustrated in Table 26.

Properties of the product obtained are summarized in Table 27.

| | |
|---|---|
| Foaming machine : | High pressure foam dispensing machine Model-MQ. (a product of Hennecke Machinen Bau) |
| Line Speed : | 10 m/min |
| Temperature : | Material: 30 - 40 °C Cure oven: 55 °C |
| Product : | 1 m Width × 40 mm Thickness<br>35 mm Foam layer |
| Facing material : | Laminated paper on the top and bottom |

As seen in these results, the polyols of the invention have suitable reactivity. Consequently, the mixture of foaming ingredients does not cause sagging phenomenon, even when it is sprayed on a vertical face material, and can give good appearance on the surface of spray applied foam. Good adhesion of sprayed foam to the face material can also be obtained. The rigid foam thus obtained has excellent flame retardance and low heat conductivity, and thus provides composite boards having excellent performance.

The formulations used in the preparation of rigid polyurethane foam composites are illustrated in Table 24 and 25. However, the formulations are not limited to the above embodiment and it is to be understood that the formulations illustrated in Table 11 and Table 18 (polyol D, E and G) can also be used for the preparation of polyurethane foam composites.

Table 24

| | Example | | | Comparative Example | | |
|---|---|---|---|---|---|---|
| | 82 | 83. | 84 | 28 | 29 | 30 |
| Formulation (g) | | | | | | |
| MDI-CR | 145.3 | 145.3 | 133.5 | 127 | 127 | 127 |
| Polyol | | | | | | |
| D-5 | 100 | 100 | | | | |
| E-4 | | | 100 | | | |
| R-1 | | | | 100 | 100 | |
| R-2 | | | | | | 100 |
| TCEP | 10 | 10 | 10 | 10 | 10 | 10 |
| $H_2O$ | 0.5 | 0.5 | 0.5 | 0.5 | 0.5 | 0.5 |
| L-5420 | 1.5 | 1.5 | 1.5 | 1.5 | 1.5 | 1.5 |
| Kaolizer No. 1 | 2.4 | 2.4 | 3.6 | 5.0 | 5.0 | 5.0 |
| LL-690D | 0.1 | 0.1 | 0.1 | 0.1 | 0.1 | 0.1 |
| CFC-11 | | | | 19 | | |
| HCFC-141b | 32 | | | | 17 | |
| HCFC-123 | | 44 | 42 | | | 23 |

Note: TCEP : Flame retardant, Tris (2-chloroethyl) phosphate a product of Daihachi Chem. Co.

LL-690D: Catalyst, Lead octoate of 40% by weight dioctylphtharate solution

Table 25

| | Example | | | Comparative Example | | |
|---|---|---|---|---|---|---|
| | 82 | 83 | 84 | 28 | 29 | 30 |
| Formulation (in Tabel 24) | Ex. 82 | Ex. 83 | Ex. 84 | C. Ex. 28 | C. Ex. 29 | C. Ex. 30 |
| Reactivity<br>Tack-free time (sec.) | 4～5 | 4～5 | 4～5 | 5 | 5～6 | 5 |
| Sag phenomenon (1)<br>Surface appearance<br>Adhesion | none<br>good<br>good | none<br>good<br>good | none<br>good<br>good | none<br>good<br>good | exist<br>good<br>good | exist<br>good<br>good |
| Foam density ($kg/m^3$) | 36.4 | 36.8 | 36.8 | 38.0 | 39.0 | 39.0 |
| Compressive strength ($kg/cm^2$) | 3.34 | 3.35 | 3.30 | 3.25 | 3.10 | 2.95 |
| Heat conductivity (kcal/mhr ℃) | 0.0165 | 0.0167 | 0.0170 | 0.0180 | 0.0190 | 0.0188 |
| Combustibility (2)<br>Combustion time (sec.)<br>Burned distance (mm) | <br>22<br>18 | <br>20<br>17 | <br>21<br>19 | <br>24<br>19 | <br>35<br>20 | <br>33<br>21 |

Note: (1) Sag is a phenomenon where a raw material mixture before curing sags or runs down on a vertical surface when the mixture is sprayed to foam on the surface.
(2) Combustibility (Flame retardation): ASTM D 1691
(3) In formulation, Ex. indicates Example No. C. Ex. indicates Comparative Example No.

Table 26

| | Example | | | Comparative Example | | |
|---|---|---|---|---|---|---|
| | 85 | 86 | 87 | 31 | 32 | 33 |
| Formulation (g) | | | | | | |
| MDI-CR | 135 | 135 | 143 | 144 | 144 | 144 |
| Polyol | | | | | | |
| D-3 | 100 | 100 | | | | |
| E-6 | | | 100 | | | |
| R-1 | | | | 100 | 100 | |
| R-2 | | | | | | 100 |
| TCEP | 10 | 10 | 10 | 10 | 10 | 10 |
| $H_2O$ | 1.5 | 1.5 | 1.5 | 1.5 | 1.5 | 0.5 |
| L-5420 | 1.5 | 1.5 | 1.5 | 1.5 | 1.5 | 1.5 |
| Kaolizer No. 1 | 0.8 | 0.8 | 2.0 | 3.0 | 3.0 | 2.8 |
| CFC-11 | | | | 37 | | |
| HCFC-141b | 32 | | | | 30 | |
| HCFC-123 | | 42 | 43 | | | 44 |

Table 27

| | Example | | | Comparative Example | | |
|---|---|---|---|---|---|---|
| | 85 | 86 | 87 | 31 | 32 | 33 |
| Formulation (in Table 26) | 85 | 86 | 87 | 31 | 32 | 33 |
| Adhesion between face material and foam | good | good | good | good | good | good |
| Foam density ($kg/m^3$) | 30.3 | 31.5 | 31.0 | 30.0 | 31.0 | 31.5 |
| Compressive strength ($kg/cm^2$) | 1.64 | 1.75 | 1.60 | 1.55 | 1.05 | 1.00 |
| Flexural strength ($kg/cm^2$) | 2.50 | 2.40 | 2.44 | 2.45 | 1.95 | 1.85 |
| Heat conductivity (kcal/mhr °C) | 0.0163 | 0.0165 | 0.0170 | 0.0170 | 0.0185 | 0.0186 |
| Combutibility Conbustion time (sec.) Combustion distance (mm) | 22<br>16 | 21<br>14 | 21<br>15 | 23<br>16 | 30<br>21 | 31<br>20 |

## Claims

1. Use of a polyol D, F or G for making a rigid polyurethane foam, the polyol D consisting of a phenol resin based polyol A and an aminophenol based polyol B in a ratio polyol A/polyol B of from 0.25 to 4.0 by weight and having a hydroxyl value of from 180 to 700 mgKOH/g,

    the said polyol A consisting of a polyol a and a polyol b in a polyol a/polyol b ratio of from 0.25 to 4.0 by weight, or a polyol a and a polyol c in a polyol a/polyol c ratio of from 0.1 to 4.0 by weight, the said polyol a having a hydroxyl value of from 140 to 350 mgKOH/g and being prepared by the addition of from 1.0 to 4.5 moles of an alkylene oxide to one equivalent of hydroxyl of a phenol resin or a mixture hereof having a number average molecular Weight of from 650 to 1400, an average functionality of from 3 to 8 and the formula:

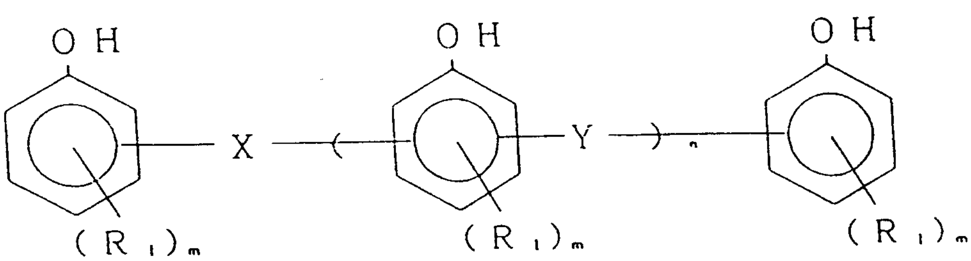

    in which $R_1$ is a hydrogen atom, alkyl having from 1 to 9 carbon atoms, a chlorine, bromine or fluorine atom, or hydroxyl, m is 1, 2 or 3, n is an integer from 1 to 6, and X and Y are same or different divalent groups selected from an alkylene having 1 to 10 carbon atoms, xylene, oxy, thio and sulphonyl or bonded group of the above-mentioned groups,

    the said polyol b having a hydroxyl value of 240 to 800 mgKOH/g and being obtained by adding from 0.5 to 3.0 moles of an alkylene oxide to one equivalent of active hydrogen in an alkanolamine series compound or a mixture thereof having the formula :

    $NR_2R_2R_3$

in which $R_2$ and $R_3$ are a hydrogen atom, hydroxyethyl or hydroxyisopropyl, $R_2$ and $R_3$ are same or different but excluding the case where both $R_2$ and $R_3$ are hydrogen atoms,

the said polyol c having a hydroxyl value of 130 to 750 mgKOH/g and being obtained by the addition of from 0.5 to 6.5 moles of an alkylene oxide to one equivalent of hydroxyl group of one or more of ethylene glycol, diethylene glycol, propylene glycol, dipropylene glycol, butanediol, neopentyl glycol, cyclohexane dimethanol, cyclohexane tetramethanol, glycerol, trimethylolethane, trimethylolpropane, pentaerythritol, methylglucoside, sorbitol, mannitol, dulcitol and sucrose, and the said aminophenol base polyol B consisting of a polyol d having a hydroxyl value of from 150 to 700 mgKOH/g and the said polyol b in a polyol d/polyol b ratio of from 0.25 to 4.0 by weight or polyol d and polyol c in a polyol d/polyol c ratio of from 0.1 to 4.0 by weight, the said polyol d being obtained by adding from 1.0 to 9.0 moles of an alkylene oxide to one equivalent of active hydrogen in an aminophenol series compound or a mixture thereof having a number average moluecular weight of from 100 to 200, average functionality of from 3 to 6, and the formula:

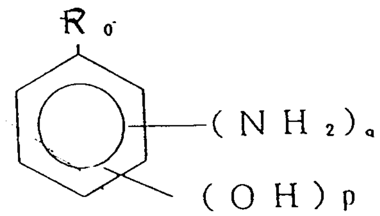

in which $R_o$ is a hydrogen atom, aliphatic hydrocarbon group having from 1 to 5 carbon atoms, or alicyclic hydrocarbon group, q is 1 or 2, and p is 1 or 2,

the said polyol E consisting of the said phenol resin based polyol A and a polyphenylpolyxylylenepolyamine based polyol C in a polyol A/polyol C ratio of from 0.25 to 4.0 by weight and having a hydroxyl value of from 180 to 700 mgKOH/g,

the said polyphenylpolyxylylenepolyamine based polyol C consisting of a polyol e having a hydroxyl value of from 150 to 700 mgKOH/g and the said polyol b in a polyol e/polyol b ratio of from 0.25 to 4.0 by weight or the said polyol e and the said polyol c in a polyol e/polyol c ratio of from 0.1 to 4.0 by weight, the said polyol e being obtained by adding from 1.0 to 9.0 moles of an alkylene oxide to one equivalent of active hydrogen in a polyphenylpolyxylylenepolyamine series compound of a mixture thereof having a number average molecular weight of from 300 to 1500, average functionality of from 4 to 8, and the formula

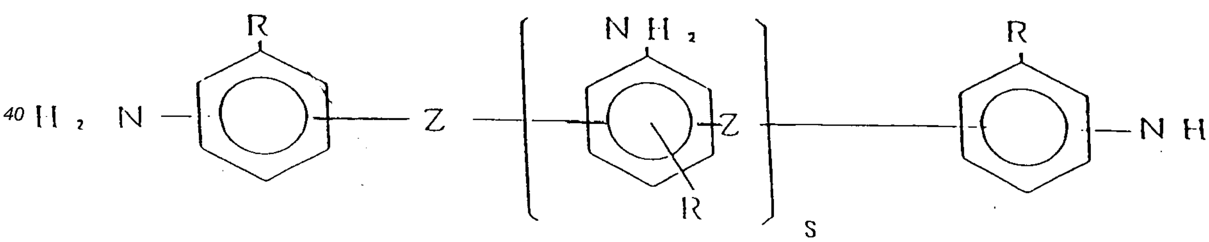

in which R is a hydrogen atom, aliphatic hydrocarbon having from 1 to 10 carbon atoms, or an alicyclic hydrocarbon, Z is xylylene and S is 0 or an integer of from 1 to, 10, and

the said polyol G consisting of the said phenol resin based polyol A and a polyphenylpolyxylylenepolyamine based polyol F in a polyol A polyol F ratio of from 0.25 to 4.0 by weight and having a hydroxyl value of from 180 to 700 mgKOH/g,

the said polyphenylpolyxylylenepolyamine based polyol F consisting of a polyol f having a hydroxyl value of from 150 to 700 mgKOH/g and the said polyol b in a polyol f/polyol b ratio of from 0.25 to 4.0 by weight or the said polyol f and the said polyol c in a polyol f/polyol c ratio of from 0.1 to 4.0 by weight,

said polyol f being obtained by the addition of from 1.0 to 9.0 moles of an alkylene oxide to one equivalent of active hydrogen in polyphenylpolyxylylenepolyamine.

2. Use of a polyol as claimed in Claim 1 in which the phenol resin on which the polyol A is based is a novolak resin and $R_1$ is a hydrogen atom and both X and Y are methylene.

3. Use of a polyol as claimed in Claim 2 in which the novolak resin has a number of average molecular weight of from 650 to 900, average functionality of from 3 to 8, and a softening point of from 75 to 120 °C.

4. A rigid polyurethane foam obtained by the reaction of an organic polyisocyanate with a resin premix consisting of a polyol D, E or G as defined in Claim 1, a foaming agent comprising a single compound or a mixture thereof selected from a hydrochlorofluorocarbon or a hydrofluorocarbon, catalyst, cell regulator, additives selected from plasticizer, filler, stabilizer, ultraviolet absorber and colorant, and optionally an auxiliary foaming agent.

5. A rigid foam as claimed in Claim 4 in which the phenol resin on which the polyol A is based is a novolak resin and $R_1$ is a hydrogen atom and both X and Y are methylene.

6. A rigid foam as claimed in Claim 5 in which the novolak resin has a number average molecular weight of from 650 to 900, average functionality of from 3 to 8, and a softening point of from 75 to 120 °C.

7. A rigid foam as claimed in any of claims 4 to 6 in which the organic polyisocyanate comprises an isocyanate terminated prepolymer.

8. A rigid foam as claimed in any of claims 4 to 7 in which the equivalent ratio of an isocyanate group in the organic polyisocyanate to a hydroxyl group in the polyol D, E or G is in the range of from 0.8 to 5.0.

9. A rigid foam as claimed in any of claims 4 to 8 in which the hydrochlorofluorocarbon is 2,2-dichloro-1,1,1-trifluoroethane, 1,1-dichloro-1-fluoroethane, or 1-chloro-1,1-difluoromethane, comprising a single compound or a mixture thereof selected from a hydrochlorofluorocarbon or a hydrofluorocarbon, and the hydrofluorocarbon is 1,1,1,2-tetrafluoroethane, or 1,1-difluoroethane.

10. A rigid foam as claimed in any of claims 4 to 9 in which the auxiliary foaming agent is water and/or a hydrocarbon having a boiling point of from 10 to 50 °C.

11. A process for the preparation of a rigid polyurethane foam comprising reacting an organic polyisocyanate with a resin premix consisting of the said polyol D, E or G as defined in Claim 1, a foaming agent comprising a single compound or a mixture thereof selected from a hydrochlorofluorocarbon or a hydrofluorocarbon, catalyst, cell regulator, additives selected from plasticizer, filler, stabilizer, ultraviolet absorber and colorant, and optionally an auxiliary foaming agent, the polyol D, E or G being used in the equivalent ratio of an isocyanate group in the organic polyisocyanate to hydroxyl group in the polyol in the range of from 0.8 to 5.0.

12. A process as claimed in Claim 11 in which a portion or the whole of the organic polyisocyanate comprises an isocyanate terminated prepolymer.

13. A process for the preparation of a rigid polyurethane foam composite comprising reacting an organic polyisocyanate with a premix consisting of the said polyol D, E or G as defined in Claim 1, a foaming agent comprising a single compound or a mixture thereof selected from a hydrochlorofluorocarbon or a hydrofluorocarbon, a catalyst, cell regulator, additives selected from plasticizer, filler, stabilizer, ultraviolet absorber and colorant, and optionally an auxiliary foaming agent, the said polyol D, E or G being used in the equivalent ratio of an isocyanate group in the organic polyisocyanate to a hydroxyl group in the polyol is in the range of from 0.8 to 5.0, to form a rigid polyurethane foam on a face material or in a cavity surrounded by a plurality of face material.

14. A process as claimed in Claim 13 in which the rigid polyurethane foam is formed by a pouring or spraying process.

15. A process as claimed in Claim 13 or Claim 14 in which a portion or the whole of the organic polyisocyanate comprises an isocyanate terminated prepolymer.

## Patentansprüche

1. Verwendung eines Polyols D, E oder G zur Herstellung von Polyurethanhartschaumstoff,

wobei das Polyol D aus einem Polyol A auf Phenolharz-Basis und einem Polyol B auf Aminophenol-Basis in einem Massenverhältnis Polyol A/Polyol B von 0,25 bis 4,0 mit einem Hydroxylwert von 180 bis 700 mgKOH/g besteht,

wobei das Polyol A aus einem Polyol a und einem Polyol b in einem Massenverhältnis Polyol a/Polyol b von 0,25 bis 4,0 oder aus einem Polyol a und einem Polyol c in einem Massenverhältnis Polyol a/Polyol c von 0,1 bis 4,0 besteht, das Polyol a dabei einen Hydroxylwert von 140 bis 350 mgKOH/g besitzt und durch Addition von 1,0 bis 4,5 Mol eines Alkylenoxids zu einer äquivalenten Menge Hydroxyl eines Phenolharzes oder dessen Mischung mit einer durchschnittlichen relativen Molekülmasse von 650 bis 1 400, einer durchschnittlichen Funktionalität von 3 bis 8 und der folgenden Formel erhalten wird:

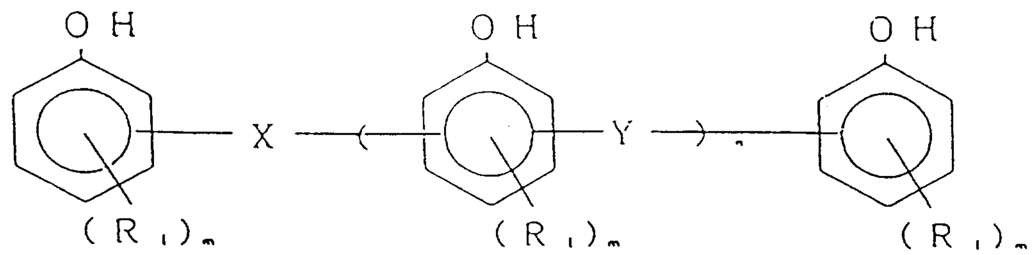

in der $R_1$ ein Wasserstoffatom, ein Alkyl mit 1 bis 9 Kohlenstoffatomen, ein Chlor-, Brom- oder Fluoratom oder ein Hydroxyl bedeutet, m die Zahl 1, 2 oder 3 und n eine ganze Zahl zwischen 1 und 6 ist und X und Y die gleichen oder verschiedene zweiwertige Gruppen sind, die unter Alkylen mit 1 bis 10 Kohlenstoffatomen, Xylen, einer Oxy-, Thio- und Sulphonyl- oder gebundenen Gruppe der oben erwähnten Gruppen ausgewählt werden,

das Polyol b dabei einen Hydroxylwert von 240 bis 800 mgKOH/g besitzt und durch Addition von 0,5 bis 3,0 Mol eines Alkylenoxids zu einer äquivalenten Menge aktiven Wasserstoffes in einer Verbindung der Alkanolaminreihe oder deren Mischung mit der folgenden Formel erhalten wird:

$NR_2R_2R_3$

in der $R_2$ und $R_3$ ein Wasserstoffatom, Hydroxyethyl oder Hydroxyisopropyl bedeuten und gleich oder verschieden sind, ohne daß jedoch sowohl $R_2$ als auch $R_3$ Wasserstoffatome sind,

das Polyol c dabei einen Hydroxylwert von 130 bis 750 mgKOH/g besitzt und durch Addition von 0,8 bis 6,5 Mol eines Alkylenoxids zu einer äquivalenten Menge einer Hydroxylgruppe aus einem Ethylenglycol, Diethylenglycol, Propylenglycol, Dipropylenglycol, Butandiol, Neopentylglycol, Cyclohexandimethanol, Cyclohexantetramethanol, Glycerol, Trimethylolethan, Trimethylolpropan, Pentaerythritol, Methylglucosid, Sorbitol, Mannitol, Dulcitol und Saccharose oder mehreren dieser Verbindungen erhalten wird,

und das Polyol B auf Aminophenol-Basis aus einem Polyol d mit einem Hydroxylwert von 150 bis 700 mgKOH/g und dem Polyol b in einem Massenverhältnis Polyol d/Polyol b von 0,25 bis 4,0 oder dem Polyol d und dem Polyol c in einem Massenverhältnis Polyol d/Polyol c von 0,1 bis 4,0 besteht, wobei das Polyol d durch Addition von 1,0 bis 9,0 Mol eines Alkylenoxids zu einer äquivalenten Menge aktiven Wasserstoffes in einer Verbindung der Aminophenolreihe oder deren Mischung mit einer durchschnittlichen relativen Molekülmasse von 100 bis 200, einer durchschnittlichen Funktionalität von 3 bis 6 und der folgenden Formel erhalten wird:

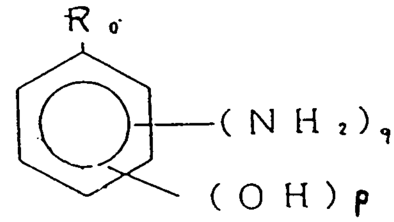

in der $R_0$ ein Wasserstoffatom, eine aliphatische Kohlenwasserstoffgruppe mit 1 bis 5 Kohlenstoffatomen oder eine alicyclische Kohlenwasserstoffgruppe bedeutet, q die Zahl 1 oder 2 und p die Zahl 1 oder 2 ist,
wobei das Polyol E aus dem Polyol A auf Phenolharz-Basis und einem Polyol C auf Polyphenylpolyxylylenpolyamin-Basis in einem Massenverhältnis Polyol A/Polyol C von 0,25 bis 4,0 besteht und einen Hydroxylwert von 180 bis 700 mgKOH/g besitzt,

das Polyol C auf Polyphenylpolyxylylenpolyamin-Basis dabei aus einem Polyol e mit einem Hydroxylwert von 150 bis 700 mgKOH/g und dem Polyol b in einem Massenverhältnis Polyol e/Polyol b von 0.5 bis 4,0 oder dem Polyol e und dem Polyol c in einem Massenverhältnis Polyol e/Polyol c von 0,1 bis 4,0 besteht, wobei das Polyol e durch Addition von 1,0 bis 9,0 Mol eines Alkylenoxids zu einer äquivalenten Menge aktiven Wasserstoffes in einer Verbindung der Polyphenylpolyxylylenpolyamin-Reihe oder deren Mischung mit einer durchschnittlichen relativen Molekülmasse von 300 bis 1 500, einer durchschnittlichen Funktionalität von 4 bis 8 und der folgenden Formel erhalten wird:

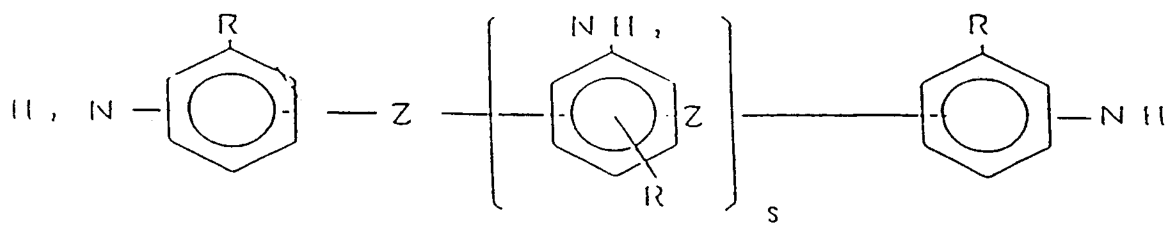

in der R ein Wasserstoffatom, ein aliphatischer Kohlenwasserstoff mit 1 bis 10 Kohlenstoffatomen oder ein alicyclischer Kohlenwasserstoff und Z Xylylen bedeuten und S Null oder eine ganze Zahl zwischen 1 und 10 ist, und
wobei das Polyol G aus dem Polyol A auf Phenolharz-Basis und einem Polyol F auf Polyphenylpolyxylylenpolyamin-Basis in einem Massenverhältnis Polyol A/Polyol F von 0,25 bis 4,0 besteht und einen Hydroxylwert von 180 bis 700 mgKOH/g besitzt,

das Polyol F auf Polyphenylpolyxylylenpolyamin-Basis dabei aus einem Polyol f mit einem Hydroxylwert von 150 bis 700 mgKOH/g und dem Polyol b in einem Massenverhältnis Polyol f/Polyol b von 0,25 bis 4,0 oder dem Polyol f und dem Polyol c in einem Massenverhältnis Polyol f/Polyol c von 0,1 bis 4,0 besteht, wobei das Polyol f durch Addition von 1,0 bis 9,0 Mol eines Alkylenoxids zu einer äquivalenten Menge aktiven Wasserstoffs in Polyphenylpolyxylylenpolyamin erhalten wird.

**2.** Verwendung eines Polyols gemäß Anspruch 1, wobei die Phenolharz-Basis des Polyols A ein Novolak-Harz ist, $R_1$ ein Wasserstoffatom darstellt und sowohl X als auch Y Methylen sind.

**3.** Verwendung eines Polyols gemäß Anspruch 2, wobei das Novolak-Harz eine durchschnittliche relative Molekülmasse von 650 bis 900, eine durchschnittliche Funktionalität von 3 bis 8 und eine Erweichungstemperatur zwischen 75 °C und 120 °C besitzt.

**4.** Polyurethanhartschaumstoff, der durch die Reaktion eines organischen Polyisocyanats mit einer Harzvormischung, bestehend aus einem Polyol D, E oder G, wie es im Anspruch 1 definiert ist, einem Treibmittel, das aus einer einzelnen Verbindung oder einer Mischung besteht, die unter einem Fluorchlorkohlenwasserstoff oder Fluorkohlenwasserstoff, einem Katalysator, einem Zellregulator, Zusätzen, die ausgewählt werden unter einem Weichmacher, Füllstoff, Stabilisator, UV-Absorber und Färbungsmittel, ausgewählt wird, und wahlweise einem zusätzlichen Treibmittel, entsteht.

5. Hartschaumstoff gemäß Anspruch 4, wobei die Phenolharz-Basis des Polyols A ein Novolak-Harz ist, $R_1$ ein Wasserstoffatom darstellt und sowohl X als auch Y Methylen sind.

6. Hartschaumstoff gemäß Anspruch 5, wobei das Novolak-Harz eine durchschnittliche relative Molekülmasse von 650 bis 900, eine durchschnittliche Funktionalität von 3 bis 8 und eine Erweichungstemperatur zwischen 75 °C und 120 °C besitzt.

7. Hartschaumstoff gemäß einem der vorhergehenden Ansprüche 4 bis 6, wobei das organische Polyisocyanat ein Isocyanat-terminiertes Vorpolymer umfaßt.

8. Hartschaumstoff gemäß einem der vorhergehenden Ansprüche 4 bis 7, wobei das äquivalente Verhältnis einer Isocyanatgruppe im organischen Polyisocyanat zu einer Hydroxylgruppe im Polyol D, E oder G im Bereich von 0,8 bis 5,0 liegt.

9. Hartschaumstoff gemäß einem der vorhergehenden Ansprüche 4 bis 8, wobei der Fluorchlorkohlenwasserstoff 2,2-Dichlor-1,1,1-trifluorethan, 1,1-Dichlor-1-fluorethan oder 1-Chlor-1,1-difluormethan ist, aus einer einzigen Verbindung oder einer Mischung besteht, die unter einem Fluorchlorkohlenwasserstoff oder Fluorkohlenwasserstoff ausgewählt wird, und der Fluorkohlenwasserstoff 1,1,1,2-Tetrafluorethan oder 1,1-Diflurethan ist.

10. Hartschaumstoff gemäß einem der vorhergehenden Ansprüche 4 bis 9, wobei das zusätzliche Treibmittel Wasser und/oder ein Kohlenwasserstoff mit einem Siedepunkt zwischen 10 °C und 50 °C ist.

11. Verfahren zur Herstellung von Polyurethanhartschaumstoff, das darin besteht, daß ein organisches Polyisocyanat mit einer Harzvormischung, bestehend aus dem Polyol D, E oder G, wie es im Anspruch 1 definiert ist, einem Treibmittel, das aus einer einzigen Verbindung oder einer Mischung, die unter einem Fluorchlorkohlenwasserstoff oder Fluorkohlenwasserstoff ausgewählt wird, einem Katalysator, einem Zellregulator, Zusätzen, die ausgewählt werden unter einem Weichmacher, Füllstoff, Stabilisator, UV-Absorber und Färbungsmittel, und wahlweise einem zusätzlichen Treibmittel, zur Reaktion gebracht wird, wobei das Polyol D, E oder G im äquivalenten Verhältnis einer Isocyanatgruppe im organischen Polyisocyanat zur Hydroxylgruppe im Polyol im Bereich von 0,8 bis 5,0 verwendet wird.

12. Verfahren gemäß Anspruch 11, wobei das organische Polyisocyanat teilweise oder vollständig ein Isocyanat-terminiertes Vorpolymer umfaßt.

13. Verfahren zur Herstellung eines Polyurethanhartschaumverbundstoffes, darin bestehend, daß ein organisches Polyisocyanat zur Reaktion gebracht wird mit einer Vormischung, bestehend aus dem Polyol D, E oder G, wie es im Anspruch 1 definiert ist, einem Treibmittel, das aus einer einzelnen Verbindung oder einer Mischung besteht, die unter einem Fluorchlorkohlenwasserstoff oder Fluorkohlenwasserstoff, einem Katalysator, einem Zellregulator, Zusätzen, die ausgewählt werden unter einem Weichmacher, Füllstoff, Stabilisator, UV-Absorber und Färbungsmittel, ausgewählt wird, und wahlweise einem zusätzlichen Treibmittel, wobei das Polyol D, E oder G im äquivalenten Verhältnis einer Isocyanatgruppe im organischen Polyisocyanat zu einer Hydroxylgruppe im Polyol im Bereich von 0,8 bis 5,0 verwendet wird, um einen Polyurethanhartschaumstoff auf einem Verkleidungsmaterial oder in einem von mehreren Verkleidungsmaterialien umgebenen Raum herzustellen.

14. Verfahren gemäß Anspruch 13, wobei der Polyurethanhartschaumstoff nach einem Gieß- oder Spritzverfahren gebildet wird.

15. Verfahren gemäß Anspruch 13 oder 14, wobei das organische Polyisocyanat teilweise oder vollständig ein mit Isocyanat-terminiertes Vorpolymer umfaßt.

**Revendications**

1. Utilisation d'un polyol D, E ou G pour réaliser une mousse de polyuréthane rigide,
le polyol D consistant en un polyol A à base de résine phénolique et en un polyol B à base d'aminophénol selon un rapport polyol A/polyol B compris entre 0,25 et 4,0 en poids et présentant une valeur hydroxyle comprise entre 180 et 700 mgKOH/g,

ledit polyol A consistant en un polyol a et un polyol b selon un rapport polyol a/polyol b compris entre 0,25 et 4,0 en poids, ou un polyol a et un polyol c selon un rapport polyol a/polyol c compris entre 0,1 et 4,0 en poids, ledit polyol a présentant une valeur hydroxyle comprise entre 140 et 350 mgKOH/g et étant préparé par addition de 1,0 à 4,5 moles d'un oxyde d'alkylène à un équivalent d'hydroxyle d'une résine phénolique ou d'un mélange de celle-ci présentant un nombre de poids moléculaire moyen compris entre 650 et 1400, une fonctionnallité moyenne comprise entre 3 et 8 et la formule:

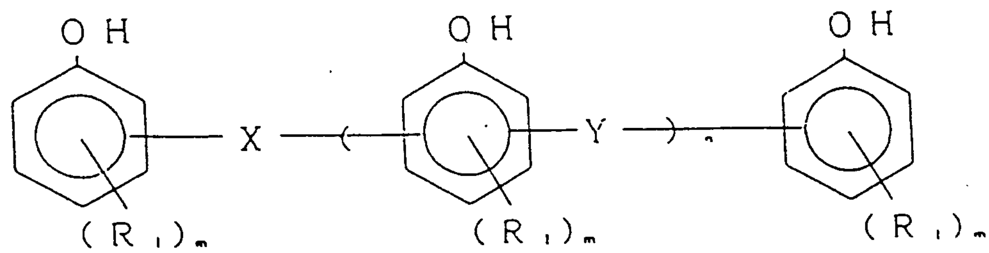

dans laquelle $R_1$ est un atome d'hydrogène, un alkyle comprenant de 1 à 9 atomes de carbone, un atome de chlore, de brome ou de fluor, ou de l'hydroxyle, m est de 1, 2 ou 3, n est un nombre entier compris entre 1 et 6 et X et Y sont des groupes divalents similaires ou différents choisis à partir d'un alkylène comprenant de 1 à 10 atomes de carbone, de xylène, oxy, thio et sulphonyle, ou d'un groupe lié des groupes susmentionnés,
ledit polyol b présentant une valeur hydroxyle comprise entre 240 et 800 mgKOH/g et étant obtenu en ajoutant de 0,5 à 3,0 moles d'un oxyde d'alkylène à un équivalent d'hydrogène actif dans un composé série d'alkanolamine ou d'un mélange de celui-ci de formule:

$NR_2R_2R_3$

où $R_2$ et $R_3$ représentent un atome d'hydrogène, de l'hydroxyéthyle ou de l'hydroxyisopropyle, $R_2$ et $R_3$ sont les mêmes ou différents mais en excluant le cas où $R_2$ et $R_3$ sont tous les deux des atomes d'hydrogène,
ledit polyol c présentant une valeur hydroxyle de 130 à 750 mgKOH/g et étant obtenu par addition de 0,8 à 6,5 moles d'un oxyde d'alkylène à un équivalent de groupe hydroxyle d'un ou plusieurs de éthylène glycol, diéthylène glycol, propylène glycol, dipropylène glycol, butanédiol, néopentyle glycol, cyclohexane diméthanol, cyclohexane tétraméthanol, glycérol, triméthyloéthane, triméthylopropane, pentaérythritol, méthylglucoside, sorbitol, mannitol, dulcitol et sucrose, et ledit polyol B à base d'aminophénol consistant en un polyol d présentant une valeur hydroxyle comprise entre 150 et 700 mgKOH/g et ledit polyol b selon un rapport polyol d/polyol b compris entre 0,25 et 4,0 en poids ou de polyol d et de polyol c selon un rapport polyol d/polyol c compris entre 0,1 et 4,0 en poids, ledit polyol d étant obtenu en ajoutant de 1,0 à 9,0 moles d'un oxyde d'alkylène à un équivalent d'hydrogène actif dans un composé série d'aminophénol ou dans un mélange de celui-ci présentant un poids moléculaire moyen compris entre 100 et 200, une fonctionnallité moyenne comprise entre 3 et 6, et la formule

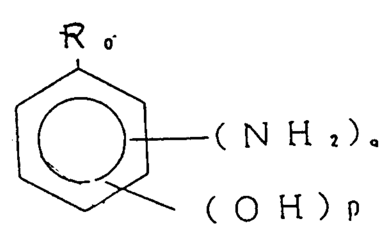

où $R_o$ est un atome d'hydrogène, un groupe d'hydrocarbures aliphatiques comprenant de 1 à 5 atomes de carbone, ou un groupe d'hydrocarbures alicycliques, q est 1 ou 2, et p est 1 ou 2,
ledit polyol E consistant en ledit polyol A à base de résine phénolique et un polyol C à base de polyphénylpoly-xylylènepolyamine selon un rapport polyol A/polyol C compris entre 0,25 et 4,0 en poids et présentant une valeur hydroxyle comprise entre 180 et 700 mgKOH/g,
ledit polyol C à base de polyphénylpolyxylylènepolyamine consistant en un polyol e présentant une

valeur hydroxyle comprise entre 150 et 700 mgKOH/g et ledit polyol b selon un rapport polyol e/polyol b compris entre 0,25 et 4,0 en poids, ou ledit polyol e et ledit polyol c selon un rapport polyol e/polyol c compris entre 0,1 et 4,0 en poids, ledit polyol e étant obtenu en ajoutant de 1,0 à 9,0 moles d'un oxyde d'alkylène à un équivalent d'hydrogène actif dans un composé série de polyphénylpolyxylylènepolyamine d'un mélange de celui-ci présentant un poids moléculaire moyen compris entre 300 et 1500, une fonctionnallité moyenne comprise entre 4 à 8, et la formule

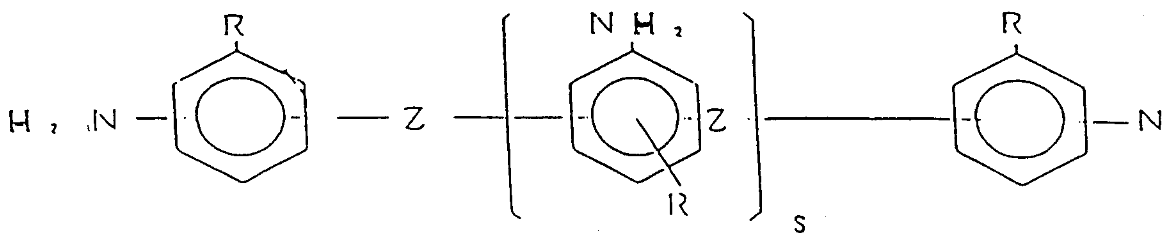

dans laquelle R est un atome d'hydrogène, un hydrocarbure aliphatique comprenant de 1 à 10 atomes de carbone, ou un hydrocarbure alicyclique, Z est du xylylène et S est O ou un nombre entier compris entre 1 et 10, et

ledit polyol G consistant en ledit polyol A à base de résine phénolique et un polyol F à base de polyphénylpoly-xylylènepolyamine selon un rapport polyol A/polyol F compris entre 0,25 et 4,0 en poids et présentant une valeur hydroxyle comprise entre 180 et 700 mgKOH/g,

ledit polyol F à base de polyphénylpolyxylylènepolyamine consistant en un polyol f présentant une valeur hydroxyle comprise entre 150 et 700 mgKOH/g et ledit polyol b selon un rapport polyol f/polyol b compris entre 0,25 et 4,0 en poids ou ledit polyol f et ledit polyol c selon un rapport polyol f/polyol c compris entre 0,1 et 4,0 en poids,

ledit polyol f étant obtenu par addition de 1,0 à 9,0 moles d'un oxyde d'alkylène à un équivalent d'hydrogène actif dans polyphénylpolyxylylènepolyamine.

**2.** Utilisation d'un polyol selon la revendication 1, dans lequel la résine phénolique sur laquelle est basé le polyol A est une résine novolak et $R_1$ est un atome d'hydrogène et X et Y sont tous les deux du méthylène.

**3.** Utilisation d'un polyol selon la revendication 2, dans lequel la résine novolak présente un poids moléculaire moyen compris entre 650 et 900, une fonctionnallité moyenne comprise entre 3 et 8 et un points de ramollissement compris entre 75 et 120 ° C.

**4.** Mousse de polyuréthane rigide obtenue par la réaction d'un polyisocyanate organique avec un prémix de résine consistant en un polyol D, E ou G comme défini dans la revendication 1, un agent moussant comprenant un composé unique ou un mélange de celui-ci choisi parmi un hydrochlorofluorocarbone ou un hydrofluorocarbone, un catalyseur, un régulateur de cellules, des additifs sélectionnés parmi un plastifiant, une charge, un stabilisateur, un absorbant d'ultraviolets et un colorant, et optionnellement un agent moussant auxiliaire.

**5.** Mousse rigide selon la revendication 4, dans laquelle la résine phénolique sur laquelle est basé le polyol A est une résine novolak et $R_1$ est un atome d'hydrogène et X et Y sont tous les deux du méthylène.

**6.** Mousse rigide selon la revendication 5, dans laquelle la résine novolak présente un poids moléculaire moyen compris entre 650 et 900, une fonctionnallité moyenne comprise entre 3 et 8 un point de ramollissement compris entre 75 et 120 ° C.

**7.** Mousse rigide selon l'une quelconque des revendications 4 à 6, dans laquelle le polyisocyanate organique comprend un prépolymère à terminaison isocyanate.

**8.** Mousse rigide selon l'une quelconque des revendications 4 à 7, dans laquelle le rapport équivalent entre un groupe isocyanate dans le polyisocyanate organique et un groupe hydroxyle dans le polyol B, E ou G est compris entre 0,8 et 5,0.

**9.** Mousse rigide selon l'une quelconque des revendications 4 à 8, dans laquelle l'hydrochlorofluorocarbone est du 2,2-dichloro-1,1,1-trifluoroéthane, 1,1-dichloro-1-fluoroéthane, ou 1-chloro-1,1 difluorométhane comprenant un composé unique ou un mélange de celui-ci sélectionné parmi un hydrochlorofluorocarbone ou un hydrofluorocarbone, et l'hydrofluorocarbone est 1,1,1,2-tétrafloroéthane ou 1,1-difluoroéthane.

**10.** Mousse rigide selon l'une quelconque des revendications 4 à 9, dans laquelle l'agent moussant auxiliaire est de l'eau et/ou un hydrocarbure dont le point d'ébullition est compris entre 10 et 50 °C.

**11.** Procédé pour la préparation d'une mousse de polyuréthane rigide comprenant la réaction d'un polyisocyanate organique avec un prémix de résine consistant en polyol D, E ou G tel que défini dans la revendication 1, un agent moussant comprenant un composé unique ou un mélange de celui-ci sélectionné parmi un hydrochlorofluorocarbone ou un hydrofluorocarbone, un catalyseur un régulateur de cellules, des additifs sélectionnés parmi un plastifiant, une charge, un stabilisateur, un absorbant d'ultraviolets et un colorant, et optionnellement un agent moussant auxiliaire, le polyol D, E ou G étant utilisé dans te rapport équivalent entre un groupe isocyanate dans le polyisocyanate organique et le groupe hydroxyle dans le polyol compris entre 0,8 et 5,0.

**12.** Procédé selon la revendication 11, dans lequel une portion de l'ensemble du polyisocyanate organique comprend un prépolymère à terminaison isocyanate.

**13.** Procédé pour la préparation d'une mousse composite de polyuréthane rigide comprenant la réaction d'un polyisocyanate organique avec un prémix consistant en polyol D, E ou G tel que défini dans la revendication 1, un agent moussant comprenant un composé unique ou un mélange sélectionné parmi un hydrochlorofluorocarbone ou un hydrofluorocarbone, un catalyseur, un régulateur de cellules, des additifs sélectionnés parmi un plastifiant, une charge, un stabilisateur, un absorbant d'ultraviolets et un colorant, et optionnellement un agent moussant auxiliaire, le polyol D, E ou G étant utilisé dans le rapport équivalent entre un groupe isocyanate dans le polyisocyanate organique et le groupe hydroxyle dans le polyol compris entre 0,8 et 5,0 pour former une mousse de polyuréthane rigide sur la face d'un matériau ou dans une cavité entourée par une pluralité de faces de matériaux.

**14.** Procédé selon la revendication 13, dans lequel la mousse de polyuréthane rigide est formée par un procédé de versage ou de pulvérisation.

**15.** Procédé selon la revendication 13 ou la revendication 14, dans lequel une portion ou la totalité du polyisocyanate organique comprend un prépolymère à terminaison isocyanate.